# EUROPEAN PATENT SPECIFICATION

(11) **EP 3 135 066 B1**
(45) Date of publication and mention of the grant of the patent: **17.02.2021**
(21) Application number: 15723774.4
(22) Date of filing: 21.04.2015
(51) Int. Cl.: H04W 72/04

(54) **WIRELESS COMMUNICATION DEVICE AND WIRELESS COMMUNICATION METHOD**
DRAHTLOSKOMMUNIKATIONSVORRICHTUNG UND DRAHTLOSKOMMUNIKATIONSVERFAHREN
DISPOSITIF DE COMMUNICATION SANS FIL ET PROCÉDÉ DE COMMUNICATION SANS FIL

(30) Priority: 21.04.2014 JP 2014087718
(43) Date of publication of application: 01.03.2017
(73) Proprietor: Kabushiki Kaisha Toshiba, Minato-ku Tokyo 105-8001 (JP)
(72) Inventor: ADACHI, Tomoko, Tokyo 105-8001 (JP); MATSUO, Ryoko, Tokyo 105-8001 (JP)
(74) Representative: Noble, Nicholas
(86) International application number: PCT/JP2015/062629
(87) International publication number: WO 2015/163480

(56) References cited:
- US-A1- 2011 222 486
- US-A1- 2013 188 571
- JI FANG ET AL: "Fine-Grained Channel Access in Wireless LAN", IEEE / ACM TRANSACTIONS ON NETWORKING, IEEE / ACM, NEW YORK, NY, US, vol. 21, no. 3, 1 June 2013 (2013-06-01), pages 772-787, XP011514826, ISSN: 1063-6692, DOI: 10.1109/TNET.2012.2212207

## Description

### FIELD

Examples described herein relate to a wireless communication terminal, a memory card, a wireless communication device and a wireless communication method.

### BACKGROUND

As a conventional technique, there is a method in which, when an extension channel is given to a reference channel, a wireless communication terminal itself and a partner wireless communication terminal notify each other the channel width of an available option and the channel width in actual use. Here, the reference channel denotes a channel to be used as a base by the wireless communication terminal, and which has a single channel width. The extension channel denotes a channel to be added to the reference channel, and which may have one or more channel widths. Moreover, the "wireless communication terminal" mentioned here may indicate not only a wireless communication terminal that performs communication with a wireless communication base station but also the wireless communication base station. Hereinafter, the wireless communication terminal is referred to as "terminal" and the wireless communication base station is referred to as "base station".

According to another method, when the extension channel is assigned together with the reference channel by an RTS (Request To Send) frame, depending on the carrier-sensed state of each channel, a terminal on the reception side of the RTS frame determines a usable channel width and transmits a CTS (Clear To Send) frame by the usable channel width as a response to the RTS frame. By transmitting the CTS frame of the usable channel width, this method makes it possible to notify an appropriate channel extension width for a data frame to be transmitted from the subject terminal, to a terminal on the RTS frame transmission side.

Moreover, there is a method in which a terminal may include, at the time of transmitting a connection request from the terminal to a base station, frequency band information indicating the number of frequency bands that can be used simultaneously. For this method, there is an assumption that each RF circuit can exclusively use only one of the two continuous frequency bands, and, by such hardware configuration limitation, the number of frequency bands that can be used at the same time is limited. In this case, the terminal transmits the connection request including the above-mentioned frequency band information to the base station such that the base station can be aware of the restriction of the number of frequency bands at the terminal.

The related art, in which the above-mentioned extension channel is used, notify how many extension channels can be taken or carrier sensing results based on the reference channel, and thus are restricted due to the reference channel being used as a base. In a case where the reference channel is identical in all terminals, the number of terminals that can perform communication with the partner terminal at the same time is limited to one. In the latter related art in which the number of frequency bands that can be used at the same time is notified, due to the above-mentioned hardware configuration limitation, the number of frequency bands that can be used at the same time is restricted.

By setting aside such channel use restriction based on the reference channel and the restriction of the number of frequency bands, OFDMA (Orthogonal Frequency Division Multiple Access) communication in which a plurality of channels are assigned to a plurality of terminals and simultaneous transmission to the plurality of terminals or simultaneous reception from the plurality of terminals is performed is considered under carrier sensing. Here, it is assumed that OFDMA includes not only a scheme of assigning to the plurality of terminals in units of subcarriers but also a scheme of assigning in units of channels. The plurality of channels used in OFDMA communication may be all channels used as a wireless communication system or a plurality of channels that are a part thereof.

In a case where OFDMA communication is performed, it is desired that, by appropriately assigning channels to each terminal, the base station improves the utilization efficiency of a plurality of channels. Therefore, the base station has to collect effective characteristic information which can be used to decide channel assignment from each terminal. However, the related art does not disclose what specific information is collected, that is, what information is notified from each terminal to the base station in order to realize an/the appropriate channel assignment.

IEEE / ACM transactions on networking, vol. 21, no. 3 pp 772-787 by Ji FANG et al. is directed to "Fine-grained channel access in Wireless LAN".

US2013188571 is directed to a channel allocation apparatus in a communication system includes: a receiving unit configured to receive terminal information containing transmission mode information of a plurality of stations (STAs) from the STAs; a checking unit configured to check transmission modes of the STAs and check a frequency band available for the STAs; an allocating unit configured to allocate channels of an allocable frequency band in the available frequency band to the STAs, according to the transmission modes of the STAs; and a transmitting unit configured to transmit channel allocation information on the channels allocated to the STAs to the STAs.

US 2011222486 is directed to allowing a wireless network access point (AP) to more fully use its bandwidth in order to leverage the different bandwidth capabilities of different types of wireless client devices that the AP serves. The AP generates control parameters for usage of a plurality of channels in a bandwidth during a downlink transmission interval. The control parameters comprise information indicating channel assignments that result in multiple downlink transmissions that at least partially overlap in time to different wireless client devices according to their respective bandwidth capabilities. The AP transmits the control parameters in a control frame in advance of the downlink transmission interval on each of the plurality of channels in the bandwidth.

### SUMMARY

An invention is disclosed in the claims.

### BRIEF DESCRIPTION OF THE DRAWINGS

FIG. 1 is a functional block diagram of a wireless communication device according to an example of the present disclosure;
FIG. 2 illustrates an example where one channel set covers a plurality of channels;
FIG. 3 is a diagram illustrating an example where one channel set covers one channel;
FIG. 4 is a diagram illustrating an operation example in a case where carrier sensing is performed;
FIG. 5 is a diagram illustrating a method of notifying information that shows a channel carrier-sensing as busy-sensing;
FIG. 6 is a diagram illustrating an example of a frame to notify information as to which channel is used to perform duplicate transmission;
FIG. 7 is a diagram illustrating an example of a response frame with respect to the frame in FIG. 6;
FIG. 8 is a diagram illustrating an example in a case where managing takes place up to NAV information and carrier sensing is implemented in every channel;
FIG. 9 is a diagram illustrating a variation as to how to cover a channel by each channel set in a case where two channel sets are provided;
FIG. 10 is a diagram illustrating an example of information elements to notify the capability of a terminal related to MU-MC;
FIG. 11 is a diagram illustrating an example of information elements to notify carrier sensing separation capabilities;
FIG. 12 is a diagram illustrating an example of extended capabilities elements;
FIG. 13 is a diagram illustrating an example of information elements that notify MU-MC supportability information together with carrier sensing separation capability information;
FIG. 14 is a diagram illustrating a wireless communication group consisting of a base station and a plurality of terminals;
FIG. 15 is a diagram illustrating an example of carrier sensing separation capability of terminals under control of a base station;
FIG. 16 is a diagram illustrating an example of channel assignment to a plurality of terminals by a base station;
FIG. 17 is a diagram illustrating an example of assigning a plurality of distantly-positioned channels to a terminal;
FIG. 18 is a diagram illustrating another example of channel assignment to a plurality of terminals by a base station;
FIG. 19 is a diagram illustrating an example of information elements to notify each group and terminals belonging thereto;
FIG. 20 is a diagram illustrating an example of MU-MC implementation with a plurality of terminals by a base station;
FIG. 21 is a diagram illustrating an assignment example of channel sets before a channel in use is fixed;
FIG. 22 is a diagram illustrating an assignment example of channels sets after a channel in use is fixed;
FIG. 23 is a diagram illustrating another assignment example of channels sets after a channel in use is fixed;
FIG. 24 is a diagram illustrating the significance of continuous channels;
FIG. 25 is a flowchart illustrating an operations example of a terminal according to an example of the present disclosure;
FIG. 26 is a flowchart illustrating an operations example of a base station according to the example of the present disclosure;
FIG. 27 is a diagram illustrating an example of a guard band;
FIG. 28 is a diagram illustrating a hardware configuration example of a wireless communication device according to an example of the present disclosure;
FIG. 29 is a perspective view of wireless equipment according to an example of the present disclosure;
FIG. 30 is a diagram illustrating a memory card according to the example of the present disclosure;
FIG. 31 is a diagram illustrating one example of frame exchange in a contention period;
FIG. 32 is a diagram illustrating an example of a reference channel and an extension channel using IEEE802.11n standard and IEEE802.11ac standard;
FIG. 33 is a diagram illustrating another example of a reference channel and an extension channelusingIEEE802.11ac standard; and
FIG. 34 is an explanatory diagram of resource-block-based OFDMA.

### DETAILED DESCRIPTION

According to one example, a wireless communication terminal, includes a notifier. The notifier notifies a first information showing a number of channel sets each of which is a set of one or two or more consecutive channels out of a plurality of channels in a predetermined frequency band and among each of which the wireless communication terminal is able to separately transmit and receive a signal.

According to one example, a wireless communication terminal, includes a receiver and a manager. The receiver receives a first information showing a number of channel sets each of which is a set of one or two or more consecutive channels out of a plurality of channels in a predetermined frequency band and among each of which a signal is able to be separately transmitted and received with the wireless communication device. The manager performs channel assignment from the plurality of channels according to the first information.

Hereinafter, examples of the present disclosure are described with reference to the drawings. The entire contents of IEEE Std 802.11™-2012 and IEEE Std 802.11ac™-2013, is known as the wireless LAN standard.

### (First Example)

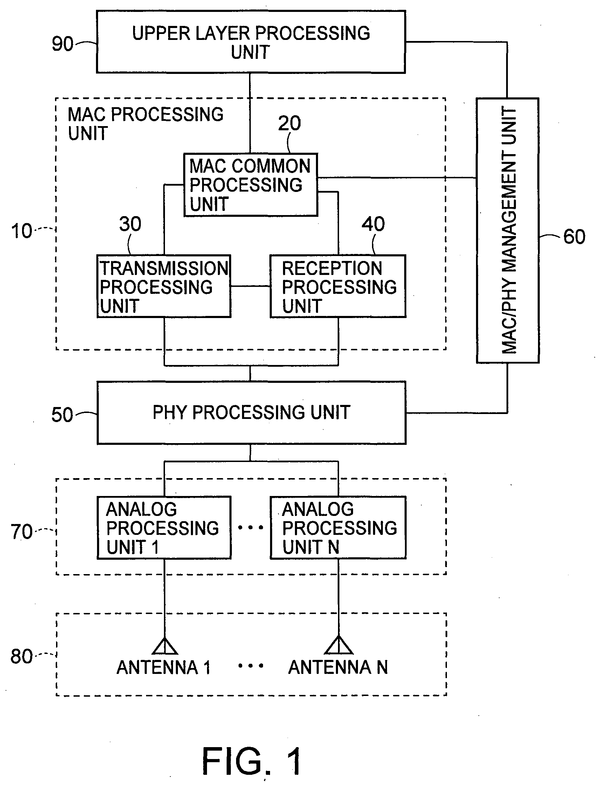

FIG. 1 illustrates a functional block diagram of a wireless communication device according to the first example. This wireless communication device can be installed in a wireless communication base station or a wireless communication terminal that communicates with the wireless communication base station. The wireless communication base station (hereinafter "base station") is one form of the wireless communication terminal. Hereunder, when a wireless communication terminal (hereinafter "terminal") is mentioned, it may also refer to a base station as long as the two do not have to be particularly distinguishable.

In the present example, it is assumed that the base station assigns a plurality of channels of a basis channel width (for example, 20 MHz width) to a plurality of terminals and performs OFDMA (Orthogonal Frequency Division Multiple Access) communication to perform simultaneous transmission to the plurality of terminals or simultaneous reception from the plurality of terminals. In the present example, such OFDMA communication is particularly referred to as "Multi-User MultiChannel (MU-MC) communication" or "channel-based OFDMA communication".

However, even in an OFDMA scheme for performing assignment to a plurality of terminals in subcarrier units, it can be applied to subsequent examples as well as the MU-MC case when a resource block including a plurality of consecutive subcarriers as one unit in a consecutive frequency domain (for example, in a channel width of 20 MHz, a channel width of 40 MHz, a channel width of 80 MHz or a channel width of 160 MHz) is used as substitute for a channel in MU-MC (in such case, the resource block may be referred to as a "subchannel") and assigned to each terminal.

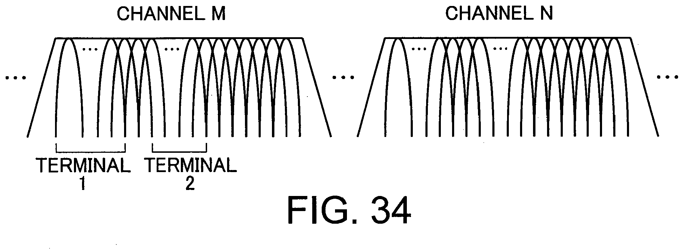

For example, as illustrated in FIG. 34, let it be assumed that a plurality of channels are allocated in a frequency domain and a band width of each channel is, for example, 20 MHz. The frequency domain of the band width of the one channel or a frequency domain of the band width bonding a plurality of consecutive channels (for example, 40, 80 or 160 MHz) corresponds to a consecutive frequency domain. In a consecutive frequency domain, a plurality of frequency-consecutive subcarriers are disposed so as to be orthogonal to each other. One or more resource blocks each including one or a plurality of consecutive subcarriers are assigned to each of the terminals. In the example of Fig. 34, resource blocks are assigned to the terminals 1 and 2 in the frequency domain of one channel. By employing resource blocks respectively assigned to the terminals, simultaneous transmission to the plurality of terminals or simultaneous reception from the plurality of terminals is performed. Such OFDMA communication is especially referred to as "resource-block-based OFDMA communication". In this case, when a "channel" in an example described below is replaced with the "resource block", subsequent examples can be similarly applied. In the example shown in Fig.34, two subcarriers are disposed as guard subcarriers between the resource blocks assigned to the terminals 1 and 2. The number of the guard subcarriers is not limited to two, and the number may be any number more than or equal to one. However, it is not always necessary to dispose the guard subcarrier(s) between the resource blocks assigned to the terminals, and it is also possible not to dispose the guard subcarrier(s) between the resource blocks assigned to the terminals. The number of subcarriers included in each resource block is basically same, but it may be allowed that the number of subcarriers may vary among each resource block. According to the width of the frequency domain to be used in the resource-block-based OFDMA communication, the band width of each subcarrier disposed in the frequency domain may vary. For example, when one channel (for example, 20MHz) is used in the resource-block-based OFDMA communication, the band width of each subcarrier included in the one channel may be narrower than that of each subcarrier disposed in the frequency domain of the band width of 40MHz bonding two consecutive channels.

Incidentally, it may be allowed that the subcarrier-unit scheme is performed in combination with MU-MC. For example, assignment in subcarrier units or resource block units to terminals is individually performed in each of the plurality of channels of 20 MHz. At this time, the number of subcarriers per one resource block is identical among each channel, but it may be allowed that the number of subcarriers of one resource block varies between channels. One or a plurality of resource blocks in one channel may be assigned to one terminal, or a plurality of resource blocks belonging to a plurality of channels may be assigned to one terminal.

Here, from the viewpoint of backward compatibility, it is required to allow the reception and decoding of PHY packets by at least a basic channel width (a channel width of 20 MHz when a terminal conforming to the IEEE802.11a/b/g/n/ac standards is assumed to be a legacy terminal) of a legacy terminal that is a subject of backward compatibility. Therefore, in a case where it is desired to acquire below-described network allocation vector (NAV) information on a resource block(s), NAV information may be acquired in channel units and NAV information on the channel may be commonly applied to resource blocks included in the channel.

Moreover, as stated above, in the case where the subcarrier-unit scheme is performed in combination with MU-MC, it may be allowed to expand an example based on a channel in MU-MC as described below into an example based on the combination of a channel and a resource block (or subcarrier).

In the following, explanation is continued on the assumption of "channel-based OFDMA communication". In each non-base station terminal and in the base station, one or more consecutive channels out of a plurality of channels in a predetermined frequency band are assumed as a channel set, and it is possible to independently transmit and receive a signal between the base station and each terminal for each channel set. As an example, it is possible to determine the carrier-sensed busy/idle state sensing independently for each channel set. When performing MU-MC communication, the base station acquires information showing the number of channel sets which can be set in each non-base station terminal, from each terminal, and performs channel assignment for the MU-MC communication to each terminal on the basis of the acquired information. As a result of this, the utilization efficiency of a plurality of channels is improved and appropriate channel assignment is realized. The plurality of channels used in the MU-MC communication may be all channels used as a wireless communication system or may be a plurality of channels that are a part thereof. In the following explanation, it may be indicated that one channel set is assigned to one or plural consecutive channels. This means that a transmission/reception unit (such as an analog processing unit or a PHY processing unit) of a wireless communication device is set such that signals can be transmitted and received under an assumption that a set of the one or plural consecutive channels is one channel set.

As illustrated in FIG. 1, a wireless communication device installed on a terminal (a terminal that is a non-base station or a base station) includes an upper layer processing unit 90, a MAC processing unit 10, a (Physical) PHY processing unit 50, a MAC/PHY management unit (or MAC/PHY manager or a control circuitry) 60, an analog processing unit 70 (analog processing units 1 to N) and an antenna 80 (antennas 1 to N). The MAC processing unit 10, the MAC/PHY management unit 60 and the PHY processing unit 50 correspond to one form of a communication processing device that performs processing related to communication with other terminals (which may indicate a base station). The analog processing unit 70 corresponds to one form of a radio communication unit that transmits and receives a signal via the antenna 80, for example. The functions of the communication processing device, or all or a part of digital domain processes of the upper layer processing unit 90, the MAC processing unit 10, the PHY processing unit 50 and the MAC/PHY management unit 60 may be executed by software (program) that operates on a processor such as a CPU, may be executed by hardware or may be executed by both software and hardware. The software may be stored in a storage medium such as ROM memory, RAM memory, hard disks or/and SSDs, and read and executed by a processor. The terminal (which may indicate a base station) may include a processor that performs the all or a part of the processes of the upper layer processing unit 90, the MAC processing unit 10, the PHY processing unit 50 and the MAC/PHY management unit 60, or the process of the communication processing device.

The upper layer processing unit 90 processes a MAC (Medium Access Control) layer for higher layers. The upper layer processing unit 90 can exchange signals with the MAC processing unit 10. Although representative higher layers include TCP/IP, UDP/IP and application layers of higher level thereof, the present example is not limited to these. The upper layer processing unit 90 may include a buffer for data exchange between the MAC layer and the higher layer. The buffer may be a volatile memory such as a DRAM, or a non-volatile memory such as a NAND or an MRAM.

The MAC processing unit 10 performs processing for the MAC layer. As mentioned above, the MAC processing unit 10 can exchange signals with the upper layer processing unit 90. In addition, the MAC processing unit 10 can exchange signals with the PHY processing unit 50. The MAC processing unit 10 includes a MAC common processing unit 20, a transmission processing unit 30 and a reception processing unit 40. The MAC processing unit 10 may access a storage device that stores pieces of information to be transmitted to the terminal (which may indicate a base station), or pieces of information received from the terminal, to read the pieces of information. The storage device may be either a buffer (an internal memory) provided in the MAC processing unit 10 or a buffer (an external memory) outside the MAC processing unit 10. The storage device may be either a volatile memory such as a DRAM or a non-volatile memory such as NAND or MRAM. In addition, the storage device may be an SSD, a hard disk, or the like instead of a memory.

The MAC common processing unit 20 performs processing common to transmission and reception in the MAC layer. The MAC common processing unit 20 is connected with the upper layer processing unit 90, the transmission processing unit 30, the reception processing unit 40 and the MAC/PHY management unit 60, and exchanges signals with these.

The transmission processing unit 30 and the reception processing unit 40 are interconnected. Moreover, the transmission processing unit 30 and the reception processing unit 40 are each connected with the MAC common processing unit 20 and the PHY processing unit 50. The transmission processing unit 30 performs transmission processing in the MAC layer. The reception processing unit 40 performs reception processing in the MAC layer.

The PHY processing unit 50 performs processing for the PHY layer. As mentioned above, the PHY processing unit 50 can exchange signals with the MAC processing unit 10. The PHY processing unit 50 is connected with the antenna 80 through the analog processing unit 70.

The MAC/PHY management unit 60 is connected with each of the upper layer processing unit 90, the MAC processing unit 10 (to be more specific, the MAC common processing unit 20) and the PHY processing unit 50. The MAC/PHY management unit 60 manages MAC operations and PHY operations in a wireless communication device.

The analog processing unit 70 includes analogue/digital and digital/analogue (AD/DA) converters and an RF circuit, converts a digital signal from the PHY processing unit 50 into an analog signal of a desired frequency and transmits it from the antenna 80, or converts a high-frequency analog signal received from the antenna 80 into a digital signal. Here, although the AD/DA conversion is performed in the analog processing unit 70, a configuration is possible in which the AD/DA conversion function is provided in the PHY processing unit 50.

In the present example, a channel set including one or two or more plural consecutive channels is referred to as a "channel set". A terminal can perform signal transmission and reception or signal processing, independently, in units of channel sets. As one example, in each channel set, it is possible to independently determine (in units of channel sets) whether the carrier sensing state is busy or idle. The terminal has maximum N (N is an integer equal to or greater than 1) channel sets for which it can independently determine whether the carrier sensing state is busy or idle, as described above. In a case where the terminal can have a plurality of channel sets, each channel set may include only other channels (for example, one other channel), some of the channels may overlap among several channel sets, or the channels of each channel set can be the same channels. Between when carrier sensing is performed and when communication is performed after the carrier sensing state is determined to be idle, the content of the channel set may be changed, for example, each channel set may be arbitrarily set within a range of the number of channel sets held by the terminal. Details of the channel set are described later.

As one example, in a case where the terminal can have maximum N (N is an integer equal to or greater than 1) channel sets, N analog processing units 70 and N antennas 80 are provided. In this case, the N analog processing units 70 and N PHY processing units 50 are installed, and the PHY processing units and the analog processing units may be connected in a one-to-one correspondence. In a case where N PHY processing units 50 are installed, the transmission processing unit 30 and the reception processing unit 40 which support each of these may be installed. In addition, a common PHY processing unit shared across N PHY processing units 50 may be installed. Moreover, instead of providing the N analog processing units 70 as illustrated in FIG. 1, one analog processing unit 70 may be connected with the antenna 80. In this case, the analog processing unit 70 only needs to separate signals and noise, which are received from each channel via the antenna 80, by digital filtering. Therefore, it is not necessary to provide a plurality of antennas 80, and one may suffice. Also, in the case of transmission, the analog processing unit 70 adjusts the digital filter so as to perform transmission in a channel and channel bandwidth designated by the PHY processing unit 50.

A wireless communication device according to the present example can suppress the mounting area of this antenna 80 by including (integrating), as a component, the antenna 80 in a chip. In addition, in the wireless communication device according to the present example, as illustrated in FIG. 1, the transmission processing unit 30 and the reception processing unit 40 share the N antennas 80. Thanks to the transmission processing unit 30 and the reception processing unit 40 sharing the N antennas 80, it is possible to miniaturize the wireless communication device in FIG. 1. Here, the wireless communication device according to the present example may have a configuration other than the one exemplified in FIG. 1.

At the time of signal transmission to a radio medium, the PHY processing unit 50 receives a MAC frame from the transmission processing unit 30. The PHY processing unit 50 adds a preamble and a PHY header to the MAC frame, performs processing such as coding and modulation, and converts it into a PHY packet. The analog processing unit 70 converts the PHY packet, which is a digital signal, into an analog signal of a desired frequency (for example, an analog signal of a bandwidth of 20 MHz of a central frequency of 2412 MHz). The antenna 80 radiates the analog signal from the analog processing unit 70 to the radio medium. Here, the PHY processing unit 50 outputs a signal, showing that the radio medium is busy during a period of signal transmission, to the MAC processing unit 10 (more accurately, to the reception processing unit 40).

At the time of signal reception from the radio medium, the analog processing unit 70 converts the analog signal received by the antenna 80 into a signal of a baseband in which the PHY processing unit 50 can process, and converts it into a digital signal. The PHY processing unit 50 receives the digital reception signal from the analog processing unit 70, detects the reception level thereof and determines its PHY scheme. As the PHY scheme, for example, there are modulation schemes such as OFDM and spread spectrum and their related coding schemes. In a case where the PHY processing unit 50 can identify the PHY scheme of the received signal, that is, in a case where it supports said PHY scheme, it selects a carrier sensing level according to the PHY scheme and compares the selected carrier sensing level and the level of the received signal (reception level). On the other hand, in a case where the PHY processing unit 50 cannot identify the PHY scheme of the received signal, that is, in a case where it does not support said PHY scheme, it selects a value 20 dB higher than the minimum modulation and coding rate sensitivity in channel spacing in a wireless communication system, as the carrier sensing level. For example, in a case where a channel spacing of 20 MHz is used, since the minimum modulation and coding rate sensitivity is -82 dB, -62 dB is selected as the carrier sensing level. Further, the selected carrier sensing level and the reception level are compared. In a case where the reception level is equal to or greater than the selected carrier sensing level, the PHY processing unit 50 outputs a signal, showing that the medium (CCA; Clear Channel Assessment) is busy, to the MAC processing unit 10 (more accurately, to the reception processing unit 40). When the reception level is lower than the selected carrier sensing level, the PHY processing unit 50 outputs a signal, showing that the medium (CCA) is idle, to the MAC processing unit 10 (more accurately, to the reception processing unit 40). In a case where the wireless communication device includes a plurality of channel sets for which it can be determined whether the carrier-sensed state is busy or idle, the PHY processing unit 50 separately manages the digital signal input from each analog processing unit 70. The PHY processing unit 50 outputs carrier sensing information (information on whether the CCA is idle or busy) for each channel set to the MAC processing unit 10 (more accurately, to the reception processing unit 40).

If the PHY scheme of the received signal is appropriate (that is, the wireless communication device supports it), the PHY processing unit 50 extracts a payload by performing demodulation processing, decoding processing and by removing the preamble and the PHY header. In IEEE802.11 standard, this payload is referred to as "PSDU (Physical Layer Convergence Procedure (PLCP) Service Data Unit)" on the PHY side. The PHY processing unit 50 passes the extracted payload to the reception processing unit 40 as a MAC frame. In IEEE802.11 standard, this MAC frame is referred to as "MPDU (Medium Access Control (MAC) Protocol Data Unit)". In addition, when the reception of the received signal starts, the PHY processing unit 50 notifies this information to the reception processing unit 40, and, when the reception of the received signal ends, it notifies this information to the reception processing unit 40. Also, in a case where the received signal was normally decoded as a PHY packet (if no error is detected), the PHY processing unit 50 notifies the end of reception of the received signal and passes a signal showing that the medium is idle to the reception processing unit 40. In a case where an error is detected in the received signal, the PHY processing unit 50 notifies the reception processing unit 40 that the error was detected, by the use of an appropriate error code based on the error type. Moreover, at the timing when it determines that the medium is idle, the PHY processing unit 50 sends a signal showing that the medium is idle to the reception processing unit 40.

The MAC common processing unit 20 mediates the transfer of transmission data from the upper layer processing unit 90 to the transmission processing unit 30 and of reception data from the reception processing unit 40 to the upper layer processing unit 90. Moreover, the MAC common processing unit 20 temporarily receives an instruction from the MAC/PHY management unit 60 and converts it into an instruction suitable for the transmission processing unit 30 and/or the reception processing unit 40, and then outputs it to the transmission processing unit 30 and/or the reception processing unit 40.

The MAC/PHY management unit 60 corresponds to, for example, SME (Station Management Entity) in IEEE802.11 standard. In this case, an interface between the MAC/PHY management unit 60 and the MAC common processing unit 20 corresponds to MLME SAP (MAC subLayer Management Entity Service Access Point) in IEEE802.11 standard, and an interface between the MAC/PHY management unit 60 and the PHY processing unit 50 corresponds to PLME SAP (Physical Layer Management Entity Service Access Point) in IEEE802.11 wireless LAN.

Here, in FIG. 1, although the MAC/PHY management unit 60 is illustrated as if a function unit for the MAC management and a function unit for PHY management are integrated, they may be separately mounted.

The MAC/PHY management unit 60 maintains a management information base (MIB). The MIB stores various kinds of information of the terminal such as capabilities and validity/invalidity of each of various functions. For example, it stores information on the number (such as the maximum number) of channels sets that can be set at a terminal and information as to whether a terminal supports MU-MC. These pieces of information can be also acquired from other terminals (such as base stations) by means of notifications from each terminal as described below. A memory to store the various kinds of information related to these terminals may be incorporated in the MAC/PHY management unit 60, or it may be separately installed without being incorporated in the MAC/PHY management unit 60 and the MIB may be kept and managed therein. In that case, the MAC/PHY management unit 60 may be able to refer to and rewrite this separate memory. The MAC/PHY management unit 60 which is a terminal operating as a base station has a grouping function to select terminals to which a plurality of channels are simultaneously assigned, on the basis of various kinds of information related to terminals operating as non-base stations (such as the above-mentioned maximum number of channel sets).

The MAC processing unit 10 processes three kinds of MAC frames, a data frame, a control frame and a management frame, and it also performs various kinds of processing defined in the MAC layer. Here, the three kinds of MAC frames are described.

The management frame is used to manage a communication link with other terminals. Beacon frames to notify group attributes and synchronization information to form a wireless communication group which is a basic service set (BSS) in IEEE802.11 standard, and frames exchanged for authentication or communication link establishment, and so on are examples of management frames. Here, a state where a certain terminal completes information exchange required to implement mutual wireless communication with another terminal is referred to as a communication link being established. The required information, for example, is a notification of a function supported by the subject terminal or a negotiation related to the scheme setting, and so on. The management frame is generated by the transmission processing unit 30 on the basis of instructions received from the MAC/PHY management unit 60 via the MAC common processing unit 20.

Regarding the management frame, the transmission processing unit 30 has a notifying unit (i.e., a notifier or a control circuitry) to notify various kinds of information to other terminals by the use of management frames. By transmitting management frames including information showing the number of channel sets that can be set at a wireless communication device of a terminal, the notifying unit of the terminal as a non-base station may notify this information to the base station. A notification controlling unit to control the notifying unit so as to transmit the information by the management frame may be included in the MAC/PHY management unit 60. As one example, information showing the number of channel sets may be the maximum number of channels sets or other numbers, such as the number of channel sets decided according to the terminal's state. For example, in a case where the battery power of the terminal is low, it is possible to decrease power consumption by reducing the number of channels for communication by notifying a number of channel sets smaller than the maximum number. The notifying unit of a base station may notify a non-base station of information showing that the MU-MC scheme is possible or information showing the number of channel sets required at the non-base station, by the use of the management frame. Also, the notifying unit of the base station may notify information that specifies the channel assigned to each terminal, to each terminal by the use of the management frame. The MAC/PHY management unit 60 may include a notification controlling unit that controls the notifying unit so as to transmit these pieces of information using the management frame.

Moreover, the reception processing unit 40 has a receiver (or reception processing circuitry) that receives various kinds of information from other terminals by the use of the management frame. As one example, the receiver of a terminal as a non-base station receives information that notifies that the MU-MC scheme is possible, from a terminal as a base station. The notifying unit of the transmission processing unit 30 of the above-mentioned non-base station may notify information on the above-mentioned number of channel sets to the base station, in response to this information that the MU-MC scheme is possible. Moreover, the receiver of the reception processing unit 40 of the terminal as a non-base station may receive information that notifies the above-mentioned required number of channel sets from the base station. The notifying unit of the terminal may notify information showing the number of channel sets in a case where the number of channel sets that can be set at the wireless communication device of the terminal is equal to or greater than the required number. Moreover, the receiver of the reception processing unit 40 of the terminal as a base station may receive information showing the number of channel sets transmitted from the terminal as a non-base station by the use of the management frame, and notify it to the MAC/PHY management unit 60 which performs channel assignment.

The examples of information transmitted and received by the use of the management frame mentioned above are just examples, and, as described below, various kinds of information such as information regarding the necessity of guard bands between channel sets and information on limitations to the maximum channel number or maximum channel width among the channel sets, can be transmitted and received between terminals (which may indicate the base station) by the use of the management frame.

The data frame is used to transmit data to another terminal in a state where a communication link with the other terminal is established. For example, data is generated in a terminal by a user's application being operated, and the data is transported by the data frame. Specifically, the generated data is transferred from the upper layer processing unit 90 to the transmission processing unit 30 through the MAC common processing unit 20, and the data frame, which includes the data in a frame body field, is generated in the transmission processing unit 30 and transmitted through the PHY processing unit 50, the analog processing unit 70 and the antenna 80. Moreover, when receiving the data frame through the PHY processing unit 50 (when detecting that the received MAC frame is a data frame), the reception processing unit 40 extracts the frame body field information as data and transfers it to the upper layer processing unit 90 through the MAC common processing unit 20. As a result of this, the applications perform operations such as data writing and execution.

The control frame is used to control the transmission and reception (exchange) of the management frame and the data frame with other wireless communication devices. Examples of control frames include RTS (Request to Send) frames and CTS (Clear to Send) frames which are exchanged with other wireless communication devices to reserve a medium before starting the exchange of the management frame or the data frame. Examples of other control frames are ACK (Acknowledgement) frames and BA (Block Ack) frames which are transmitted to acknowledge the received management frame or the received data frame. These control frames are also generated in the transmission processing unit 30. Regarding the control frame transmitted as a response to the received MAC frame, such as the CTS frame, the ACK frame and the BA-frame, the transmission of a response frame is determined by the reception processing unit 40, and information required for frame generation (such as the control frame type and address information of a transmission destination terminal) together with transmission instructions is output to the transmission processing unit 30. The transmission processing unit 30 generates an appropriate control frame on the basis of the information required for the frame generation.

In the case of transmitting the MAC frame on the basis of CSMA (Carrier Sense Multiple Access), the MAC processing unit 10 has to acquire the access right (transmission right) on the medium. The transmission processing unit 30 plans the transmission timing on the basis of carrier sensing information from the reception processing unit 40. According to the relevant transmission timing, the transmission processing unit 30 gives transmission instructions to the PHY processing unit 50 to transfer the MAC frame. In addition to the transmission instructions, the transmission processing unit 30 may also instruct a modulation scheme and encoding scheme used for transmission. In addition to these, the transmission processing unit 30 may instruct transmission power. Once the access right is acquired, the MAC processing unit 10 can continuously exchange the MAC frame with other wireless communication devices for the time the medium can be occupied, although the limitations of the QoS (Quality of Service) attribute and so on needs to be followed. The access right is acquired in a case where a wireless communication device transmits a predetermined frame (for example, an RTS frame) and correctly receives a response frame (for example, a CTS frame) from another wireless communication device. When this predetermined frame is received by the other wireless communication device, the other wireless communication device transmits the above-mentioned response frame after a minimum interframe interval (Short InterFrame Space).

The reception processing unit 40 manages carrier sensing information. This carrier sensing information includes both physical carrier sensing information on the busy/idle state of the medium (CCA) input by the PHY processing unit 50 and virtual carrier sensing information based on the medium reservation time indicated in the reception frame. If any one of the carrier sensing information shows as busy, it is regarded that the medium is busy, and transmission is prohibited during that time. In IEEE802.11 standard, the medium reservation time is indicated in a so-called "duration/ID field" in the MAC header. In the case of receiving the MAC frame directed to other wireless communication devices (not self-directed), the MAC processing unit 10 determines that the medium is virtually busy over the medium reservation time from the end of the PHY packet including the MAC frame. Such a mechanism which virtually determines that the medium is busy or a period for which the medium is virtually busy, is referred to as a "NAV (Network Allocation Vector)".

In a case where the terminal has a plurality of channel sets on each of which it can determine whether the carrier sensing state is busy or idle, the carrier sensing performed in each channel set in the present example shall particularly indicate a physical carrier sensing to determine whether the CCA is busy or idle. In this case, busy/idle information on the CCA in each channel set is input from the PHY processing unit 50 into the reception processing unit 40. The reception processing unit 40 can support a wider frequency width, the frequency width information may b e notified to the base station. idths of channel sets in each of which it is possible to determine whe therum is virtually busy).

Here, virtual carrier sensing may be performed in each channel set. In this case, the MAC frame is to be transferred from the PHY processing unit 50 to the reception processing unit 40 in each channel set, and virtual carrier sensing information (NAV information) is to be managed in each channel set in the reception processing unit 40.

### <Details of channel set>

Next, a channel set for which it can be determined whether a carrier sensing state is busy or idle is described in detail.

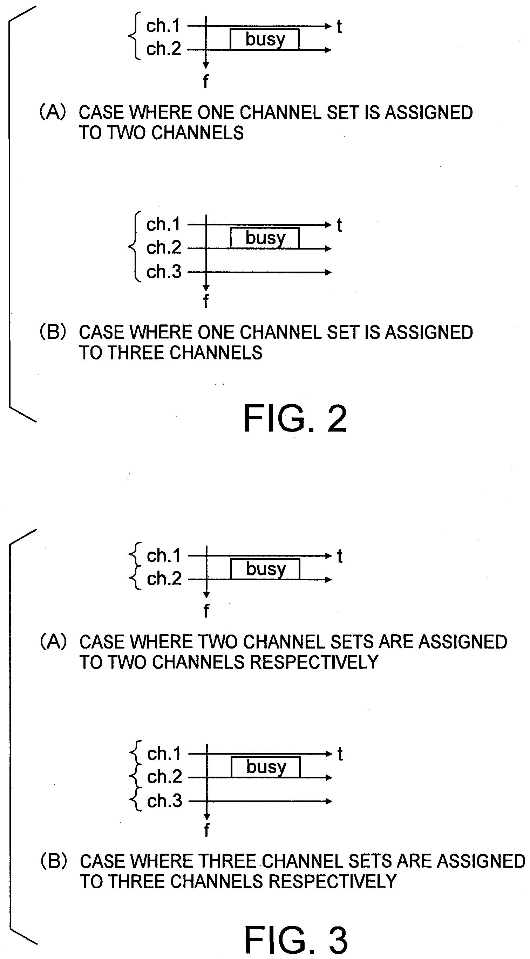

FIG. 2 illustrates an example in a case where one channel set is assigned to a plurality of channels. Specifically, FIG. 2(A) illustrates an example of assigning one channel set to two consecutive channels (expressed as "ch.1" and "ch.2"). FIG. 2(B) illustrates an example of assigning one channel set to three consecutive channels (expressed as "ch.1", "ch.2" and "ch.3"). In the present example, in a case where there is a signal or noise in one channel (ch.2) as illustrated in FIG. 2(A), it is determined that the channel set (that is, both ch.1 and ch.2) is busy. Definitely, it is determined that the channel set is also busy in a case where there is a signal or noise in both channels. Moreover, in a case where there is a signal or noise in at least one channel (ch.2 in this example) as illustrated in (B), it is determined that the channel set (that is, all of ch.1, ch.2 and ch.3) is busy. Definitely, in a case where the signal or noise is received in not only in one channel but in two or all channels, it is determined that the channel set is also busy.

Thus, in a case where one channel set is assigned to one or two or more consecutive channels, it can be said that the sum (OR) of the known states of carrier sensing in the channels of the set is assumed to be a carrier sensing state of the channel set. If applying the model of bandwidth operations in IEEE802.11ac standard which are defined in terms of two carrier sensing states of "dynamic" and "static", it can be said that a static operation is performed in the channel set of the present example.

FIG. 3 illustrates an example in a case where separate channel sets are assigned to a plurality of channels. Specifically, FIG. 3(A) illustrates a case where two channel sets are respectively assigned to two channels (expressed as "ch.1" and "ch.2"), and FIG. 3(B) illustrates a case where three channel sets are respectively assigned to three channels (expressed as "ch.1", "ch.2" and "ch.3"). In the case where one channel set covers a plurality of channels as illustrated in FIG. 2, the plurality of channels have to be consecutive, but in a case where a plurality of channel sets are set as illustrated in FIG. 3, channels do not have to be consecutive between the channel sets. FIG. 3 merely illustrates an example where the channels are consecutive between the channel sets. In a case where separate channel sets are assigned to ch.1 and ch.2 as illustrated in FIG. 3(A), even if there is a signal or noise in one channel (ch.2), it is possible to distinguish that the other channel (ch.1) is idle, and use the channel known to be idle. Moreover, in a case where any one channel (ch.2) has a signal or noise and therefore it is busy as illustrated in FIG. 3(B), it is possible to distinguish the channel state independently among the channels and detect the remaining channels (ch.1 and ch.3) to be idle, and use those channels known to be idle.

Applying the concept of the bandwidth operation related to carrier sensing in IEEE802.11ac standard, it can be said that the operation between channel sets in the present example is a dynamic operation.

Let us take, for example, a case where it is possible to operate maximum two channel sets, and one channel set is assigned to ch.1 and the other channel set is assigned to ch.2 as illustrated in FIG. 3(A), then N in FIG. 1 becomes 2, and, for example, an antenna 1 and an analog processing unit 1 are made to correspond to ch.1 and an antenna 2 and an analog processing unit 2 are made to correspond to ch.2. It can be said that the maximum number of channel sets (maximum set number) that can be set at a wireless communication device corresponds to the number of pairs of an antenna and an analog processing unit, or, in even more detail, it corresponds to the number of RF circuits. However, by using digital filter processing as mentioned above, the number of antennas and analog processing units can be arbitrarily changed without being subject to such restriction.

### <Managing carrier sensing state; relationships in the case where the concept of reference channel exists>

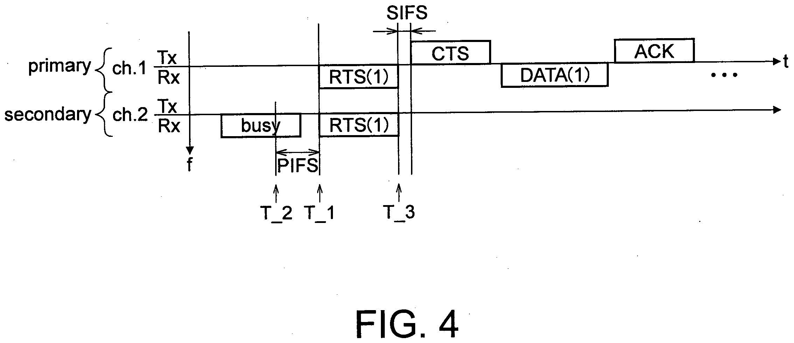

FIG. 4, based on FIG. 3(A), illustrates in more detail an operation example in a case where channels are classified into a reference channel and an extension channel and carrier sensing is implemented. In a case where a wireless communication system (BSS) uses CSMA/CA (Carrier Sensing Multiple Access with Carrier Avoidance), there is a method of limiting the time to monitor a carrier sensing state on the extension channel side in order to reduce the mounting load to monitor the carrier sensing state on the extension channel side. FIG. 4 is provided to give an illustration based thereon. In FIG. 4, the reference channel is indicated as "primary" and the extension channel is indicated as "secondary".

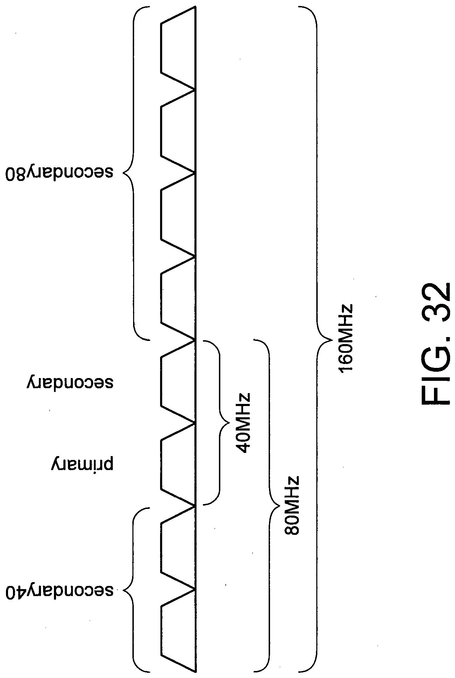

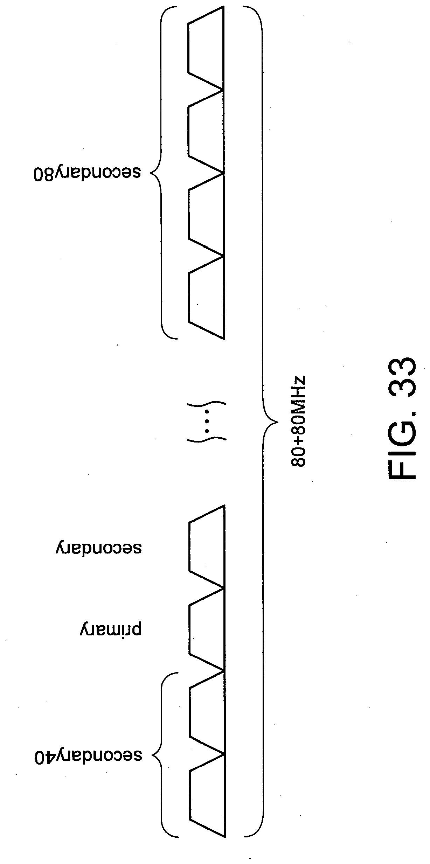

The reference channel implements virtual carrier sensing in addition to physical carrier sensing, and the extension channel implements only physical carrier sensing. FIG. 32 and FIG. 33 illustrate examples of the reference channel and the extension channel in IEEE802.11n standard and IEEE802.11ac standard. The content illustrated in FIG. 32 and FIG. 33 is extracted from the written standards of IEEE. As illustrated in FIG. 32, in the case of channel extension to 40 MHz with respect to the reference 20 MHz, the reference channel (primary) and the extension channel (secondary) are used. In the case of channel extension to 80 MHz, the reference channel (primary) and the extension channels (secondary and secondary40) are used. In the case of channel extension to 160 MHz, the reference channel (primary) and the extension channels (secondary, secondary40 and secondary80) are used. As illustrated in FIG. 33, there is also a configuration in which "secondary80" is positioned apart from "secondary" (80 + 80 MHz channel extension). In FIG. 32 and FIG. 33, although the channel indicated as "secondary" is consecutive with respect to the channel indicated as "primary", the extension channel does not have to be limited to be consecutive with respect to the reference channel in the present example.

Moreover, the reference channel and the extension channel do not have to be always fixed as a wireless communication system (BSS), and the reference channel may be independently decided in each terminal. Moreover, the reference channel may be changed at each phase of communication.

In FIG. 4, the reference channel is ch.1 and the extension channel is ch.2. As an example, the reference channel (ch.1) may correspond to "primary" in FIG. 32 and FIG. 33, and the extension channel (ch.2) may correspond to "secondary" in FIG. 32 and FIG. 33. The horizontal axis indicates the time and shows the transmission and reception state in each channel. The transmission state of the terminal is shown in the upper side of each horizontal axis and the reception state of the terminal is shown in the lower side of each horizontal axis. In a case shown here, another terminal (for convenience, STA 102.) transmits an RTS frame using ch.1 and ch.2 to the terminal (for convenience, STA 101). The RTS frame transmitted by STA 102 appears as "RTS(1)" in FIG. 4. For convenience, the number in parentheses shows the last digit of the destination. In this case, since the RTS frame is transmitted to STA 101, the digit 1, the last digit of the identification number of STA 101, was entered in brackets.

Here, the RTS frame is, for example, a duplicate PPDU (Physical Layer Convergence Procedure (PLCP) Protocol Data Unit) in IEEE802.11n standard and IEEE802.11ac standard, which is simultaneously transmitted by the reference channel and the extension channel as an identical PHY packet of 20 MHz channel width. In this case, the MAC frame level is definitely an identical frame. Here, regarding the extension channel of the present example, it may not be necessary to impose the restriction that the extension channel and the reference channel be consecutive like the 40 MHz channel extension (FIG. 32) in IEEE802.11n standard and the 80 MHz or 160 MHz channel extensions (FIG. 32) in IEEE802.11ac standard, or restriction of predefinition such as the 80 + 80 MHz channel extension (FIG. 33) in IEEE802.11ac standard.

Here, taking into account backward compatibility, to set a NAV at a legacy terminal, it is desirable that this duplicate PPDU is transmitted in a scheme decodable by the legacy terminal. For example, the PHY format newly defined in IEEE802.11n standard is referred to as an "HT format", and the PHY format defined in earlier IEEE802.11a standard and IEEE802.11g standard is referred to as a "non-HT format". In IEEE802.11n standard and IEEE802.11ac standard, the duplicate PPDU is transmitted in non-HT format and is referred to as "non-HT duplicate PPDU".

For example, the antenna 80 and the analog processing unit 70 in FIG. 1 receive signals of ch.1 and ch.2 separately, each signal being input in the PHY processing unit 50 and being determined to be a duplicate PPDU. When the PHY processing unit 50 inputs the PPDU payload as a MAC frame in the reception processing unit 40, it notifies that it is a duplicate PPDU. For example, referring to IEEE802.11 standard (including a series of extension standards such as IEEE802.11n and IEEE802.11ac), when an input of the MAC frame from the physical layer to the MAC layer starts, a PHY-SAP service primitive called "PHY-RXSTART.indication" is used, and a parameter called "RXVECTOR" is put therein and transferred. A parameter, that notifies whether it is a duplicate PPDU, may be defined inside "RXVECTOR" and used. As illustrated in FIG. 32 and FIG. 33, a way of taking an extension channel as a wireless communication system (BSS) is defined in advance, and, as long as it is a method in which the extension channel is surely extended on the basis of the reference channel, information on the channel width as the duplicate PPDU is put in "RXVECTOR" and notified to the reception processing unit 40. Therefore, such a method would suffice.

However, in a case where the extension channel does not refer to the reference channel and is determined and used from a plurality of candidate channels each time, it is necessary to know which two or more channels are combined and used as duplicates. As a result, it is necessary to define and use a parameter able to notify, information on the channels determined to be used by the PHY processing unit 50 (for example, channel numbers ch.1 and ch.2 in the case of FIG. 4) along with the existing information, to the reception processing unit 40. Alternatively, in combination with information on CCA, it is necessary to determine which two or more channels are combined and used as duplicates in the reception processing unit 40. Specifically, it is necessary to determine which two or more channels are used, on the basis of information on the channels for which it was simultaneously notified that CCA is busy and information based on "RXVECTOR" that the duplicate PPDU was received. A signal to notify that CCA is busy from the PHY processing unit 50 to the reception processing unit 40 corresponds, for example, to the PHY-CCA. indication primitive in IEEE802.11 standard.

In relation to the PHY-CCA.indication primitive, in addition to a STATE parameter that indicates BUSY or IDLE, in a case where the channel extension is performed as illustrated in FIG. 32 and FIG. 33, a "channel-list" parameter, that indicates up to which extension level the state is busy, is available.

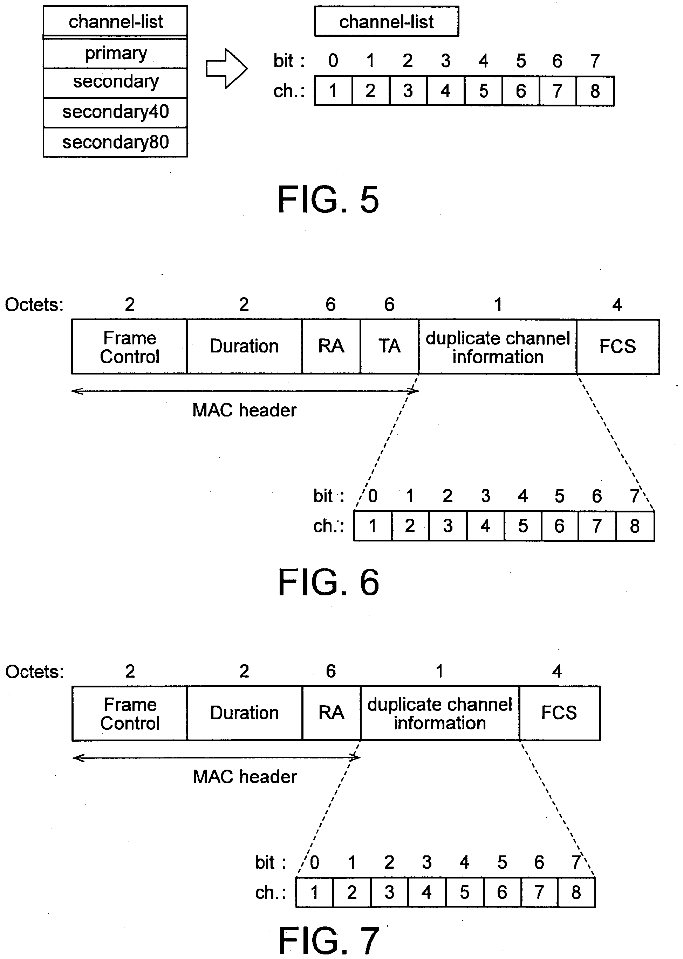

In IEEE802.11ac standard, the variables (referred to as "elements") defined as said "channel-list" parameters appear to the left side of the arrow in FIG. 5. Any one value of the primary, secondary, secondary40 and secondary80 is set in the "channel-li.st" parameters. For example, let us consider a case where a channel width of 80 MHz is used. In this case, although the primary channel, the secondary channel and the secondary40 channel in FIG. 32 and FIG. 33 are used, it is assumed that, among them, CCA is detected to be busy in the area of the secondary40 channel and CCA is idle in the primary channel and the secondary channel. In this case, the "STATE" parameter is busy and the secondary40 is set as a "channel-list" parameter. If CCA is busy in the secondary channel, even if CCA is idle in the areas of the secondary40 channel and the primary channel, the "STATE" parameter is busy and secondary is set as a "channel-list" parameter. If CCA is busy in the primary channel, even if CCA is idle in the areas of the secondary40 channel and the secondary channel, the STATE parameter is busy and primary is set as a channel-list parameter. In the case of this notification method, the order of extension from the reference channel is decided, and, although it is effective in the case of determining up to which channel including the reference channel can be used, it cannot be used in a case where there is no such restriction.

Therefore, let us assume that, a channel in which CCA is busy can be expressed in bits, like the right side of the arrow in FIG. 5, for example. For example, by marking the bit corresponding to a channel in which CCA is busy with 1, it becomes possible to identify which channel is busy. As illustrated in FIG. 4, when the RTS frame is received in the duplicate PPDU format, both ch.1 and ch.2 become busy. In the reception processing unit 40, when it is known, by means of notification of bit expression like on the right side of the arrow in FIG. 5, that ch.1 and ch.2 are busy at the same time and, as a result, that the duplicate PPDU is received in RX-START.indication, it can be determined that the duplicate PPDU was received by means of ch.1 and ch.2.

As another method, the PHY-CCA.indication primitive may be directly output to the reception processing unit 40 for every channel set. Furthermore, regarding the PHY packet, in the case of duplicate PPDUs, instead of treating received signals as one PHY packet, they may be processed as individual PPDUs and transferred to the reception processing unit 40, as MPDUs, for every channel set. That is, if RX-START.indication is specifically referred to, RX-START.indication is output for every channel set. In this case, the reception processing unit 40 determines the correspondence between each channel set and the channels. In the case of FIG. 4, it is determined that channel set 1 corresponds to ch.1 and channel set 2 corresponds to ch.2. Moreover, the reception processing unit 40 ensures that MPDU reception processing in parallel is performed for every channel set. It is desirable that the reception processing unit 40 is designed to be able to hold NAV information for every channel set.

As illustrated in FIG. 4, when an RTS frame transmitted in duplicate PPDU is received, the STA 101 determines which channel can be used to transmit a CTS frame with respect to the RTS frame. At that time, for the reference channel, the reception processing unit 40 uses a determination method implemented in CSMA/CA when only one channel is used, such as whether it is within a period of NAV set by frames received by then. On the other hand, regarding the extension channel (ch.2), it is checked whether CCA was detected to be busy in the extension channel (ch.2), between a time (T_1), at which the reception of the RTS frame received in duplicate PPDU starts, and a time (T_2) at a certain fixed time prior to the time (T_1). That is, the reception processing unit 40 does not have to continuously monitor CCA information regarding the extension channel, but it only has to use CCA information of a certain limited period. Here, the certain fixed time denotes, for example, PIFS (Point Coordination Function (PCF) InterFrame Space) in IEEE802.11 standard. PIFS is an interframe space (IFS) used to acquire priority access in CSMA/CA. PIFS is defined as a value obtained by adding the slot time defined from the minimum time to detect CCA and transmission/reception switching time, to SIFS (Short InterFrame Space) used for transmission of a response frame or burst transmission. In FIG. 4, CCA is busy in the extension channel between time T_2 and the reception start time of RTS (being a hidden terminal, STA 102 does not detect that CCA is busy in the extension channel before RTS frame transmission). Therefore, the reception processing unit 40 determines that ch.2 is currently in use, and instructs the transmission processing unit 30 such that the CTS frame is generated only in ch.1. Furthermore, after the lapse of SIFS from time T_3 at which the reception of a PHY packet including the RTS frame ends, the transmission processing unit 30 transmits the CTS frame (CTS in FIG. 4) from ch.1. At this time, for example, time T_3 at which the reception of the PHY packet including the RTS frame ends is notified from the reception processing unit 40 to the transmission processing unit 30 together with the transmission instruction of the CTS frame. By this means, the transmission processing unit 30 can plan the timing from T_3 and it gives transmission instructions to the PHY processing unit 50 such that PPDU including the CTS frame is transmitted from the PHY processing unit 50 after the lapse of SIFS from T_3.

Although the example of FIG. 4 shows a case where the number of extension channels is one with respect to the reference channel, as illustrated, for example, in FIG. 3(B), there may be a plurality of extension channels where ch.1 is the reference channel and ch.2 and ch.3 are the extension channels. In this case, with respect to the extension channels, whether CCA is busy can be determined from a period up to before PIFS of the RTS frame reception starts. Furthermore, in the above mentioned situation, when there are extension channels in which CCA is not busy, the CTS frame is transmitted even in those extension channels.

In FIG. 4, STA 102, having received the CTS frame transmitted from STA 101 in ch.1, recognizes that STA 101 has been determined that ch.2 cannot be used, and uses ch.1 to transmit a data frame to STA 101. This data frame is shown as "DATA(1)" in FIG. 4. For convenience, the number in parentheses shows the last digit of the destination. In this case, since the data frame is transmitted to STA 101, the digit 1, the last digit of the identification number of STA 101, was entered in brackets. STA 101 transmits the data frame after SIFS from the CTS frame reception. Furthermore, in FIG. 4, when STA 101 correctly receives the data frame, the sequence continues such that an ACK frame is transmitted after SIFS from the data frame reception.

### [Data frame may be aggregated. An ACK frame may be a BA frame instead.]

Here, the data frame may be such that plural MAC frames or the payload portions of plural MAC frames are conjunct. The former is referred to as an "A (Aggregated)-MPDU" and the latter is referred to as an "A (Aggregated)-MSDU (MAC service data unit)" in IEEE802.11 standard. Moreover, in a case where responses to plural MAC frames, such as when the data frames are in an A-MPDU, are collectively transmitted, a BA (Block ACK) frame is used instead of the ACK frame.

### [When it is possible to track a NAV on each channel]

In a case where MPDU is subjected to reception processing for every channel set in the reception processing unit 40 and NAV information can be tracked, instead of performing operations based on the relationship between a reference channel and an extension channel as described above, a channel for which the NAV is tracked and which any one correctly-received MPDU uses (in a case where a channel set covers a plurality of consecutive channels, the channel set consisting of the plurality of consecutive channels) may be hypothetically considered as a reference channel. That is, such a channel is set as a reference channel that determines whether to transmit a CTS frame in response to an RTS frame by using NAV information. Furthermore, other use targetted channels (or channel sets) are processed as extension channels. That is, they are set as extension channels that determine whether CCA is busy during a certain fixed period of time from the reception start of the RTS frame.

### [New frame that notifies duplicate information at MAC level]

Here, in FIG. 4, instead of the RTS frame, a new frame that can notify information as to which channel is used to perform duplicate PPDU transmission may be defined. FIG. 6 illustrates an example of the format of the new frame. In IEEE802.11 standard, a MAC frame has a basic configuration in which a frame body part is provided after a MAC header part and FCS (Frame Check Sequence) is provided at the end such that an error in the frame body part can be detected on the reception side. The MAC header part is formed with a frame control field, a duration field (which is the same as the above-mentioned duration/ID field and, especially in a case where a period for NAV setting is described, is referred to as "duration field"), a plurality of address fields (in the case of FIG. 6, two address fields, that is, RA (Receiving Address or Receiving STA Address) which is the frame transmission destination address and TA (Transmitting Address or Transmitting STA Address) which is the frame transmission source address, and a control field if necessary. The MAC address is put in the address field. In the IEEE802.11 standard, the MAC address consists of six octets.

A field for channel information subject to duplicate transmission is provided in the frame body part of this new frame. It is shown as a duplicate channel information field in FIG. 6. The duplicate channel information field is, for example, 1-octet (= byte) long, that is, 8-bit long, and each bit corresponds to the channel identifiers in a one-to-one correspondence. "1" is assigned to a bit corresponding to a channel in use and "0" is assigned otherwise. In FIG. 6, ch.1 corresponds to bit 0, ch.2 corresponds to bit 1, and so on. However, the correspondence relationships between the channel identifiers and the bits may take any form as long as common recognition is possible at least in the wireless communication system (BSS), and it is not necessary to strictly follow the format in FIG. 6. Moreover, although eight channels can be identified in the example of FIG. 6, more channels can be expressed simply by increasing the length of the duplicate channel information field. For example, in a case of transmitting the duplicate PPDU which, similarly to the RTS frame in FIG. 4, occupies ch.1 and ch.2, following the definition in FIG. 6, bits 0 and 1 are assigned the value 1 and the remaining bits are assigned 0. If such a frame is used, the reception processing unit 40 of the terminal which receives the duplicate PPDU can determine which channel is used in duplicate. Therefore, it is possible to return a response frame using appropriate channels among the channels used in duplicate.

As a response frame corresponding to the new frame illustrated in FIG. 6, although a CTS frame may be returned, a response frame corresponding to the new frame in FIG. 6 may be newly defined. FIG. 7 illustrates an example of the newly defined response frame. The duplicate channel information field in FIG. 7 shows information regarding which of the channels is used in the response frame. In a case where a response frame is returned only in ch.1 as the CTS frame shown in Fig. 4, bit 0 in the duplicate channel information field in FIG. 7 is set to 1 and the remaining bits are set to 0.

Here, similarly to FIG. 6 and FIG. 7, in a case where there is a rule that a reference channel is necessarily used when channel information transmitted by the duplicate PPDU is notified, information on the reference channel may be omitted and only information on other extension channels may be notified. The new frame illustrated in FIG. 6 and FIG. 7 corresponds to a control frame if it is defined instead of the RTS frame and the CTS frame. In IEEE802.11 standard, the frame type is identified in two fields of Type and Subtype in the frame control field shown in FIG. 6 and FIG. 7. In the case of a control frame, the Type becomes "01" in the MSB (Most Significant Bit) notation. The Subtype is set to a new value such that it does not overlap with other control frames.

### <Managing carrier sensing state - in the case where information up to NAV is handled>

Instead of the carrier sensing method illustrated in FIG. 4, an example case is shown next where carrier sensing is implemented in each channel along with information up to NAV being managed in each channel set.

If the operation follows the IEEE802.11 standard, the reception processing unit 40 of the terminal receives, from the PHY processing unit 50 for every channel set, signals for MPDU reception which starts with the PHY-CCA.indication primitive and the RX-START.indication primitive. Furthermore, the reception processing unit 40 manages, for each channel set, CCA information and at least NAV information set by an MPDU.

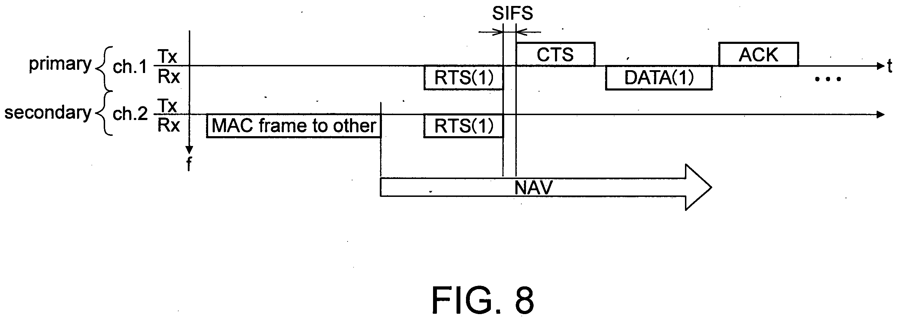

In FIG. 8, ch.1 is set as channel set 1 and ch.2 is set as channel 2 at a terminal (for convenience, STA 101), and another terminal (for convenience, STA 102) transmits an RTS frame to the terminal by the use of ch.1 and ch.2. This RTS frame is marked as RTS(1) in FIG. 8. For convenience, the number in parentheses shows the last digit of the destination. In this case, since the RTS frame is transmitted to STA 101, the digit 1, the last digit of the identification number of STA 101 was entered in brackets.

However, STA 101 receives a MAC frame directed to another terminal before receiving the RTS frame in ch.2 (STA 102 does not recognize this MAC frame because of the terminal being hidden or the like). As a result, it is assumed that, the reception processing unit 40 of STA 101 holds information that a NAV is not being set for ch.1, that is, channel set 1, and a NAV is being set for ch.2, that is, channel set 2. In a case where the duration/ID field included in the MAC header of the received MAC frame is used as a duration value, an NAV is set from the end of the received frame only for a period defined by the duration value.

It is assumed that the NAV in ch.2 overlaps the transmission timing of the CTS frame as illustrated in FIG. 8. Strictly speaking, at the time of becoming aware of the reception of the RTS frame in the reception processing unit 40 and of making a transmission determination regarding the CTS frame, it is determined that the NAV is set in ch.2. Therefore, carrier sensing up to MAC level (virtual carrier sensing based on NAV) is implemented with respect to the received RTS frame of duplicate PPDU for every channel, in other words, for every channel set in the reception processing unit 40 of STA 101. As a result of this, it is determined that the CTS frame can be transmitted in ch.1 and the CTS frame cannot be transmitted in ch.2, therefore the CTS frame is transmitted only in ch.1. In this case, a frame sequence after the CTS frame is transmitted is identical with the one in FIG. 4.

### [Width of extension channel is not limited to power of 2 of that of reference channel]

The channel width and extension channel width that can be taken in each channel set may be a width equal to a power of 2 of 20 MHz such as 20 MHz, 40 MHz, 80 MHz and 160 MHz. Nevertheless, it is not limited to this, and, for example, it may be a width of 60 MHz or 100 MHz which is an integral multiple of 20 MHz.

In the present example, a base station holds the number of channel sets that can be set simultaneously at the terminal as a capability of each terminal, where on each of the channel sets carrier sensing can be distinguished independently, and uses the information for grouping MU-MC.

The maximum number of channel sets which can be simultaneously hold, where in each of the channel set it is possible to determine whether the carrier sense state is busy or idle, is, for convenience, referred to as "carrier sensing separation capability".

In particular, in a case where MU-MC is applied, when it is considered that a plurality of channels used in MU-MC are based on channels in the same frequency band, the number of channels used for MU-MC depends on the maximum number of channel sets in the same frequency band, where each of the channel sets can independently distinguish whether the carrier sensed state is busy or idle.

For example, a terminal holds the value of this carrier sensing separation capability in a MIB. Whenever the terminal includes this value in a management frame and notifies it, this value is included as a parameter in a management frame generation instruction issued from the MAC/PHY management unit 60 to the MAC common processing unit 20. Alternatively, a memory may be contained in the MAC common processing unit 20 and the value of this carrier sensing separation capability may be held therein. In this case, in a case where the MAC common processing unit 20 receives the management frame generation instruction from the MAC/PHY management unit 60, it may read out the value of the carrier sensing separation capability from this built-in memory and include it in the frame body of the management frame as a parameter. Alternatively, a memory other than the one that holds the MIB may be provided and the value of this carrier sensing separation capability may be held therein. In this case, when the MAC common processing unit 20 receives the management frame generation instruction from the MAC/PHY management unit 60, the value of the carrier sensing separation capability may be read out from this other memory and included in the frame body of the management frame as a parameter.

### [Correspondence between channel sets and channels]

FIG. 2 illustrates an example where one channel set, in which it is possible to determine whether the carrier sensing state is busy or idle, is assigned so as to cover two consecutive channels or three consecutive channels. Nevertheless, without being limited to this example, the channel set may be assigned so as to cover more consecutive channels or more channel sets may be separately assigned to the channels.

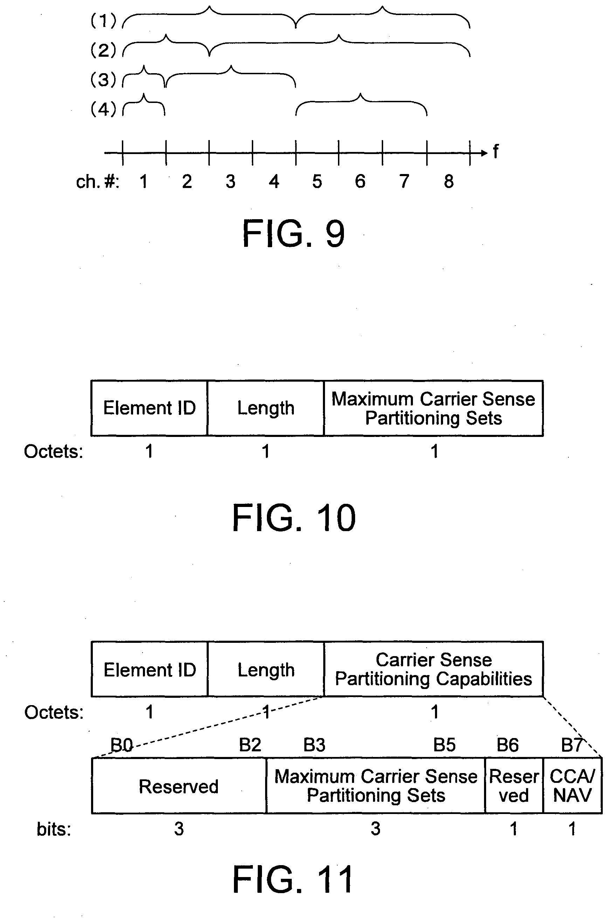

For example, when a terminal can hold a maximum of two channel sets on each of which it is possible to determine whether the carrier sensing state is busy or idle (that is, when the carrier sensing separation capability is two), examples where the two channel sets are assigned to a plurality of channels are shown in FIG. 9. With an assumption that there are eight channels that can be used in a wireless communication system (BSS), for example, four channels may be covered by each one of the channel sets as illustrated in FIG. 9(1) or the number of channels covered by each channel set may vary as illustrated in FIG. 9(2). Moreover, as illustrated in FIG. 9(3), the channels covered by two channel sets may be limited to part of the channels that can be used in the wireless communication system. In addition, as illustrated in FIG. 9(4), channel sets may be separated from each other by inserting one or a plurality of other channels between the channel sets. The terminal may be configured such that it is possible to arbitrarily assign H or fewer channel sets to one or a plurality of consecutive channels according to the carrier sensing separation capability H (H is an integer equal to or greater than 1.). Alternatively, the terminal may be configured such that it is possible to assign H or fewer channel sets to the channels only in a specific assignment pattern.

### <Method of notification from non-base station terminals to base stations>

A non-base station terminal notifies the value of the above-mentioned carrier sensing separation capability to a base station to be connected.

In IEEE802.11 standard, a plurality of procedures taken to enable the non-base station terminal to join a BSS which is formed by a base station (this is referred to as "infrastructure BSS"), and to enable the exchange of data frames within the BSS, are defined in a phased manner. Among the plurality of procedures, limited management frame transmission and transmission of ACK frames as transmission acknowledgment to the management frame are permitted. However, a management frame in which the transmission of an acknowledgement frame is permitted is a unicast frame that designates the address of a single terminal as a transmission address. Therefore, in order for the non-base station terminal to notify the value of the above-mentioned carrier sensing separation capability to the connected base station, in these procedures, the non-base station terminal can include the value of the above-mentioned carrier sensing separation capability in one of the management frame transmitted to the base station. That is, a notifying unit of a wireless communication device of the terminal notifies the value of the separation capability to the connected base station by including the value of the carrier sensing separation capability in the management frame. The transmission processing unit 30 of the wireless communication device of the terminal includes such a notifying unit. Here, in a case where the terminal can set the H or fewer channel sets only in one or a plurality of specific assignment patterns, the notifying unit of the transmission processing unit 30 may notify the information to the connected base station by including information on the specific assignment pattern in the management frame.

### [Examples of frames to be used]

For example, there is a procedure called "association", where an association request frame is transmitted from a non-base station terminal to a base station which requests connection. After transmitting an ACK frame with respect to the association request frame, the base station transmits an association response frame which is a response frame with respect to the association request frame. Therefore, for example, the terminal includes the value of carrier sensing separation capability in the association request frame and transmits it.

As a matter of course, this notification may be also included in a "reassociation" procedure for reconnection with another base station. In this procedure, a reassociation request frame is transmitted from the non-base station terminal to another base station which requests reconnection. After transmitting an ACK frame with respect to the reassociation request frame, the other base station transmits a reassociation response frame which is a response frame with respect to the reassociation request frame. Therefore, the terminal includes the value of carrier sensing separation capability in the reassociation request frame and transmits it.

Onward, although a method of including the value of the carrier sensing separation capability of the terminal in the association request frame is described, it is similarly applicable even to the reassociation request frame or other management frames.

### [Providing the field for the notification of carrier sensing separation capability]

For example, a new information element to notify the value of carrier sensing separation capability is added inside the frame body of an association request frame.

This new information element notifies the capability of a terminal related to MU-MC, for example. In this case, for example, the new information element name is referred to as "MU-MC capabilities" and is in a format as illustrated in FIG. 10. The "Element ID" field in FIG. 10 assigns a unique value to this new information element. The "Length" field shows the octet length of the following "Maximum Carrier Sensing Partitioning Sets" field.

Here, in IEEE802.11 standard, the information element is defined by the "Element ID" field, the "Length" field and a field following the "Length" field. The field following the "Length" field is generally referred to as the "information field". The "Length" field shows the length of this information field. Here, the "Maximum Carrier Sensing Partitioning Sets" field has, for example, a one-octet length and therefore a value of the "Length" field is set to "1".

The value of carrier sensing separation capability is set in the "Maximum Carrier Sensing Partitioning Sets" field. For example, 1 is set when the carrier sensing separation capability is 1 and 2 is set when the carrier sensing separation capability is 2, and so on. Alternatively, since the carrier sensing separation capability as a terminal is at least 1, and, to make sense when the value is 0, this field may be set to a value equal to the "carrier sensing separation capability minus 1", for example, 0 when the carrier sensing separation capability is 1, 1 when the carrier sensing separation capability is 2, and so on. Alternatively, for example, as a wireless communication system, a definition, or a specification, when the carrier sensing separation capability of a terminal is specified to be a power of 2, a rule may be created so that the carrier sensing separation capability is 1 in a case where the value of this field is 0, the carrier sensing separation capability is 2 in a case where the value of this field is 1 and the carrier sensing separation capability is 4 in a case where the value of this field is 2, and so on, and this field may be set to the value according to this rule.

In any case, the maximum value of carrier sensing separation capability that can be expressed is limited to the length of the "Maximum Carrier Sensing Partitioning Sets" field. Therefore, the length of the field is set such that it is possible to express the maximum value of the carrier sensing separation capability allowed by the wireless communication system, the definition, or the specification. Furthermore, in a case where the designated length of the field can express a value larger than the maximum value of the carrier sensing separation capability allowed by the wireless communication system, the definition or the specification, the field value equal to or greater than the maximum value of the allowed carrier sensing separation capability may be reserved for extension use in the future.

### [Carrier sensing separation capability notifications for CCA and NAV, respectively]

Here, the carrier sensing separation capability may be the capability of carrying out carrier sensing on CCA at PHY level or the capability of carrying out carrier sensing up to NAV at MAC level.

If either of them is allowed as a wireless communication system, a definition, or a specification, for example, information regarding up to which extent a terminal supports as its separation capability may be expressed such that such information can be identified by the notification destination.

For example, the format of an information element to notify the carrier sensing separation capability will be the one in FIG. 11 instead of the one in FIG. 10. Here, for example, the "Carrier Sensing Partitioning Capabilities" field replaced the "Maximum Carrier Sensing Partitioning Sets" field. In addition, the field is internally divided into the "Maximum Carrier Sensing Partitioning Sets" subfield to notify the value of the carrier sensing separation capability, and the "CCA/NAV" subfield. In the "CCA/NAV" subfield, for example, 0 is set in the case when carrier sensing in each channel set at a terminal can be only performed in CCA, and 1 is set in the case when carrier sensing in each channel set at a terminal can be performed up to NAV level. In FIG. 11, the "Maximum Carrier Sensing Partitioning Sets" subfield is set to 3 bits, the "CCA/NAV" subfield is set to 1 bit and the remaining parts are reserved, but the assignment of the subfields are not limited to this.

### [Notifying carrier sensing separation capability together with MU-MC support notification]

Carrier sensing separation capability may be notified in a case where a terminal supports MU-MC. That is, the carrier sensing separation capability may not be notified in a case where the terminal does not support MU-MC.

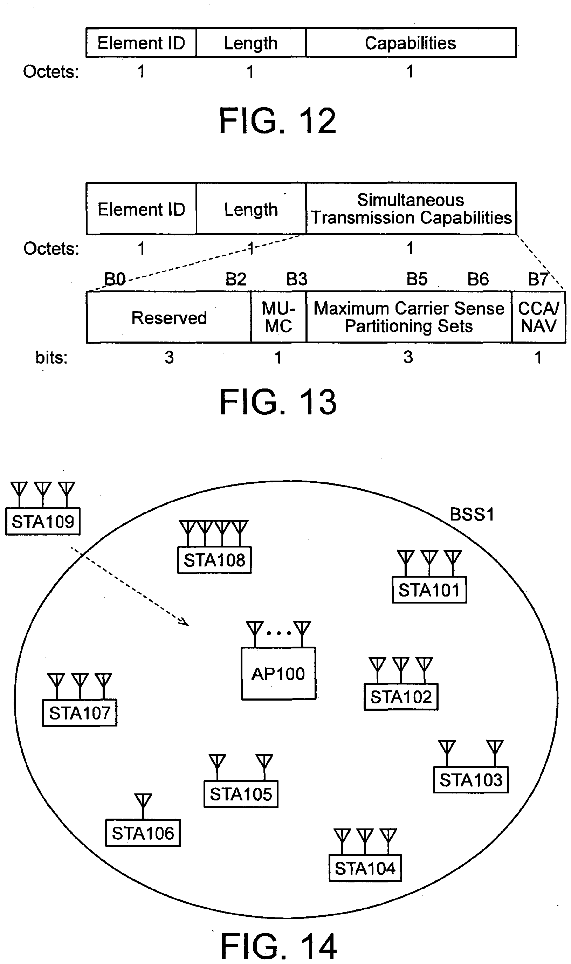

A notification that MU-MC is supported uses, for example, the "Extended Capabilities" element included in the association request frame or reassociation request frame. The "Extended Capabilities" element is illustrated in FIG. 12. The "Capabilities" field has a variable-length, and notifications of various capabilities are assigned in order from Bit 0 (part of reserved bits are also allowed). It is designed to accommodate bits up to a necessary length according to the capability to be notified. Therefore, bits which are "Reserved" at present can be used to show whether MU-MC is supported. For example, a certain bit is set to 0 in a case where MU-MC is not supported, and it is set to 1 in a case where MU-MC is supported.

In the case of notifying that MU-MC is supported in the element, a new element to notify carrier sensing separation capability, as illustrated in FIG. 10 or FIG. 11, is separately added to the association request frame or reassociation request frame.

Alternatively, in the "Extended Capabilities" element, in addition to bits showing whether MU-MC can be supported, information on carrier sensing separation capability may also be defined as a bit field. In the case of notifying that MU-MC is supported, the values of said bit fields may be made valid.

Alternatively, as illustrated in FIG. 13, a new information element that notifies information on MU-MC supportability and carrier sensing separation capability may be defined. For example, this new information element is assumed to be an element that notifies a simultaneous transmission function, and part of the information field (the "Simultaneous Transmission Capabilities" in FIG. 13) is used to notify information on MU-MC supportability and carrier sensing separation capability. The "MU-MC" subfield of Bit 3 (fourth bit), which shows the MU-MC supportability, is set to 0 when MU-MC is not supported and set to 1 when MU-MC is supported. The "Maximum Carrier Sensing Partitioning Sets" subfield assigned to the three bits of Bits 4 to 6 (fifth to seventh bits) and the "CCA/NAV" subfield assigned to Bit 7 (eighth bit) are defined in the same way as shown in FIG. 11.

Regarding the "MU-MC" subfield, 2 bits may be prepared so as to be able to discriminate whether the sublink supports a downlink (DL) or an uplink (UL). Moreover, in the subfield indicated as "Reserved" in the information field in FIG. 13, for example, information on MU-MIMO (Multi-User Multiple Input, Multiple Output) may be input. For example, in order to notify capability related to MU-MIMO, when the information field of one octet is not sufficient, the octet length may be extended.

### [Example where notification is not performed for values less than default separation capability value and where notification is performed for values equal to or larger than default separation capability, on standard]

Here, in the case any of the information out of the information discussed above becomes mandatory by notifying other information, its notification may be omitted. For example, if a capability supporting a certain new standard or specification is defined and by supporting it, MU-MC is automatically supported, then the MU-MC notification may be omitted. Moreover, if no less than 2 is required to be supported by default as a value of carrier separation capability when the new standard or specification is supported by a terminal, 3 or more may be put into the field to notify the value of the carrier sensing separation capability.

### <MU-MC support notification from base station>

Here, as illustrated in FIG. 14, it is assumed that one base station (AP: Access Point) 100 forms a wireless communication system or wireless communication group (BSS) 1 with a plurality of non-base station terminals (STA: STAtion) 101 to 108. In this BSS 1, it is assumed that the AP 100 supports at least MU-MC. Moreover, the AP 100 may actually execute MU-MC between a subset of the plurality of terminals. For example, MU-MC may be limited to the downlink (DL-MU-MC). That is, simultaneous transmission using a plurality of channels may be limited to the direction in which MU PPDU is transmitted from the base station to the subset of the plurality of terminals. In that case, MU-MC in the following explanation stands for DL-MU-MC. The same applies to a case where MU-MC is limited to the uplink (UL-MU-MC). Here, although a case is illustrated where PPDU is simultaneously transmitted at the time of DL transmission to the subset of the plurality of terminals, the transmission timing is not limited to a simultaneous one, and transmission to each terminal in independent timing is not excluded.

The configuration of the AP 100 may be similar to FIG. 1 or may connect with a wired infrastructure through the upper layer processing unit 90 in FIG. 1. That is, the AP 100 may be connected with a network other than the network formed with the STAs 101 to 108. Here, for frame transmission to the plurality of terminals or frame reception from the plurality of terminals, the PHY processing unit 50 and the MAC processing unit 10 (especially the transmission processing unit 30 in the case of the frame transmission to the plurality of terminals or especially the reception processing unit 40 in the case of the frame reception from the plurality of terminals) in FIG. 1 need to be able to process PPDUs and MPDUs to/from the plurality of terminals.

For example, the AP 100 holds information that the AP 100 itself can support MU-MC in the MIB. This MIB is, for example, dot11MuMcOptionImplemented, and the value is "TRUE" (when it does not support MU-MC, this MIB does not exist or the value is "FALSE"). It is assumed that the above-mentioned non-base station terminal has this MIB and whether it can support MU-MC is also similarly set in the MIB, for example.

The AP 100 further holds a MIB showing, when dot11MuMcOptionImplemented is "TRUE", for example, whether it is in a state where it is possible to use MC-MU (effective state). Let this be, for example, dot11MuMcOptionEnabled, and it is "TRUE" when MU-MC is in an effective state and it is "FALSE" when it is not in an effective state. In a case where this dot11MuMcOptionEnabled is "TRUE", the AP 100 includes, in a beacon frame which is a management frame generated in the transmission processing unit 30, information that MU-MC is enabled.

As a method of including the information that MU-MC is enabled in the beacon frame, similar to an above-mentioned case where the association request frame or the like is used as an example, a suitable information element may be included in the frame body of the beacon frame. For example, as described above, the information element may be such that a new definition is added to the "Extended Capabilities" element or a new information element is defined.

Moreover, in a case where dot11MuMcOptionEnabled is "TRUE", the AP 100 may include, in a probe response frame of the management frame generated in the transmission processing unit 30, information that MU-MC is enabled. The probe response frame is a frame transmitted as a response to a received probe request frame when a terminal (base station in the case of an infrastructure BSS) which transmits a beacon frame receives the probe request frame which is a management frame and the terminal forms the BSS that satisfies the conditions requested by the probe request frame. When the reception processing unit 40 of the AP 100 perceives the reception of the probe request frame, it notifies the MAC common processing unit 20 of the reception of the probe request frame and the contents entered in the probe request frame body. In a case where the MAC common processing unit 20 determines to transmit a probe response frame with respect to the probe request frame, it outputs a transmission instruction of the probe response frame to the transmission processing unit 30. The transmission processing unit 30 generates a probe response frame in which the address of a transmission source terminal of the probe request frame (TA; in the case of the management frame, since data carried by a MAC frame is the frame body of the management frame, TA is the same as a source address (SA), the transmission source address of the data) is set as the transmission destination address (RA; in the case of the management frame, since data carried by the MAC frame is the frame body of the management frame, RA is the same as a destination address (DA), the transmission destination address of the data), and outputs a transmission instruction of a probe response frame to the PHY processing unit 50.

The beacon frame is a broadcast frame, that is, the transmission destination address (RA) of the beacon frame is a broadcast address. On the other hand, the RA of the probe response frame is a unicast address which designates the address of a certain terminal. The RA is set in the forefront of a plurality of address fields in the MAC header part provided at the beginning of the MAC frame.

Here, the beacon frame and the probe response frame are transmitted to notify the attributes of the BSS. Although the attributes of the BSS are determined based on the capability or attributes of the transmitting terminal itself, the attributes notified by the beacon frame and the probe response frame are different from the individual capability and attributes of the terminal which transmits the frame.

The above showed that, in a case where dotllMuMcOptionEnabled is "TRUE", the AP 100 includes information that MU-MC is enabled in the beacon frame or the probe response frame. As another method, by MU-MC supportability being correspondent to a state where it is possible to use MU-MC, the MIB may be made, for example, only to hold the dot11MuMcOptionImplemented attribute instead of holding both the dot11MuMcOptionImplemented and dotllMuMcOptionEnabled attributes. In such case, when dot11MuMcOptionImplemented is "TRUE", information that MU-MC is enabled may be included in the beacon frame or the probe response frame.

### <Notification in response to MU-MC notification by beacon/probe response from base station>

For example, in FIG. 14, when a STA 109 joins the BSS 1, it receives a beacon frame or probe response frame transmitted by the AP 100. When the STA 109 perceives that information on MU-MC being possible is notified in the frame, the value of the above-mentioned carrier sensing separation capability is set in an association request frame and notified. To be more specific, the transmission processing unit 30 of the wireless communication device of the STA 109 transmits the association request frame including the value of the carrier sensing separation capability to the AP 100.

### <Generating grouping candidates in base stations>

### [Collecting carrier sensing separation capability data/values in base stations]

In FIG. 14, when the AP 100 receives the association request frame from the STA 109, the MAC/PHY management unit 60 determines whether to accept an association request from the STA 109. Furthermore, it gives an instruction to the transmission processing unit 30 through the MAC common processing unit 20 such that the determination result is included in an association response frame and transmitted. In IEEE802.11 standard the determination result is shown in a status code field included in the frame body of the association response frame. In the case of the association request from the STA 109 being accepted, 0 is set in the status code field to indicate the successful request. In the case of not accepting the association request from the STA 109, any suitable value of the failure code defined as 1 or more, indicating the reason for non-acceptance, is set.

In the case of accepting the association request from the STA 109, the AP 100 extracts the transmission source address of the STA 109 (here, in other words, the MAC address of the STA 109) and information on the STA 109 from the association request frame and holds them. The extracted information on the STA 109 includes the value of the carrier sensing separation capability. The extraction processing may be performed in, for example, the MAC/PHY management unit 60, and the extracted information may be held in a storage area in which the MAC/PHY management unit 60 can perform writing. In this case, when the association request is accepted in the AP 100, the MAC address of the STA 109 may be converted into an identifier which is assigned to each terminal (in this case, the STA 109) for convenience (for example, "AID" (Association ID) in IEEE802.11 standard) and held. Since the "AID" can take a value from 1 to 2007, it can be expressed by maximum 11 bits, and, since it can be expressed by an information amount smaller than the six octets of the MAC address, it is possible to reduce storage capacity. Moreover, this extraction processing may be performed in advance in the reception processing unit 40 before the MAC/PHY management unit 60 determines whether to accept the association request, and it may be held in a storage area in which the reception processing unit 40 can perform writing. In that case, when the MAC/PHY management unit 60 determines that the association request is not accepted, the MAC common processing unit 20 accesses the storage area and deletes information of the relevant terminal. When the MAC/PHY management unit 60 determines that the association request is accepted, the MAC common processing unit 20 accesses the storage area and may replace the MAC address of the relevant terminal with an identifier assigned to each terminal at the AP 100 for convenience (for example, "AID"). In any case, in the storage area that holds the terminal information, the information of each terminal only has to be linked with, for example, the MAC address of the terminal or the identifier assigned to each terminal at the AP 100 for convenience (for example, "AID"). By this means, it is possible to extract the information of the terminal if the MAC address of the terminal or the identifier assigned to each terminal at the AP 100 is designated. The storage area that holds the terminal information may be the same area as the above-mentioned MIB.

### [The case where some of the terminals (STAs) do not support MU-MC]

For example, in a case where an association request frame is received from a terminal that cannot notify the carrier sensing separation capability or from a legacy terminal that does not support MU-MC, the AP 100 may store the value of the carrier sensing separation capability of the terminal as 1.

For example, in a case where the terminal (STA) used an association request frame to notify that an 80 + 80 MHz channel extension (see FIG. 33) in IEEE802.11ac standard can be supported, the AP 100 may store the value of the carrier sensing separation capability of the terminal as 2. This is because, when 80 + 80 MHz channel extension can be supported, it means that it is possible to set "secondary80" not being consecutive to consecutive 80 MHz channels including the "primary" channel, which can be interpreted as two channel sets can be held. In a case where the supported channel width set subfield in the VHT capabilities element is 2, it means that, not only a 160 MHz channel width, but also an 80 + 80 MHz channel width can be supported, and this case corresponds thereto.

In a case where the AP 100 holds information as to whether carrier sensing separation capability is provided up to the CCA level or up to the NAV level, the information regarding legacy terminals may be held under an assumption that it corresponds to carrier sensing separation capability up to the CCA level.

### [Holding the carrier sensing separation capability of the base station itself]

In the AP 100, it is assumed that the value of carrier sensing separation capability of the AP 100 is held in a MIB, for example. The AP 100 selects the number of channels used in MU-MC according to the carrier sensing separation capability of its own. For example, the value of the carrier sensing separation capability of the AP 100 is assumed to be 8. In that case, it is desirable to select the number of channels used in MU-MC to be 8 or less. This means that, for example, by assigning a channel set in which it is possible to determine whether the carrier sensing state is busy or idle to each channel, it is possible to separate the carrier sensing information of each channel. Therefore, even if a part of the channels are in a state where they cannot be used due to a signal or noise, it is possible to realize effective communication without said channels. The AP 100 may assign the number of channels used in MU-MC or the channel sets to the channels, for example, taking into account the traffic volume in each channel in addition to the carrier sensing separation capability of its own. For example, if a part of the channels is also used by another BSS (OBSS: Overlapping BSS) or other BSSs (OBSSs) and therefore their channel use is high (that is, if the ratio of channel occupancy is high), regarding said part of channels, a channel set is assigned to each channel, and, regarding other relatively free channels (that is, channels whose ratio of channel occupancy is low), a plurality of consecutive channels are covered with one channel set. By this means, a number of channels equal to or greater than the carrier sensing separation capability of the AP100 can be used for MU-MC, and, by assigning a wider channel width for use with other terminals, it is possible to exchange data frames using higher transmission rates.

### [Grouping of terminals]

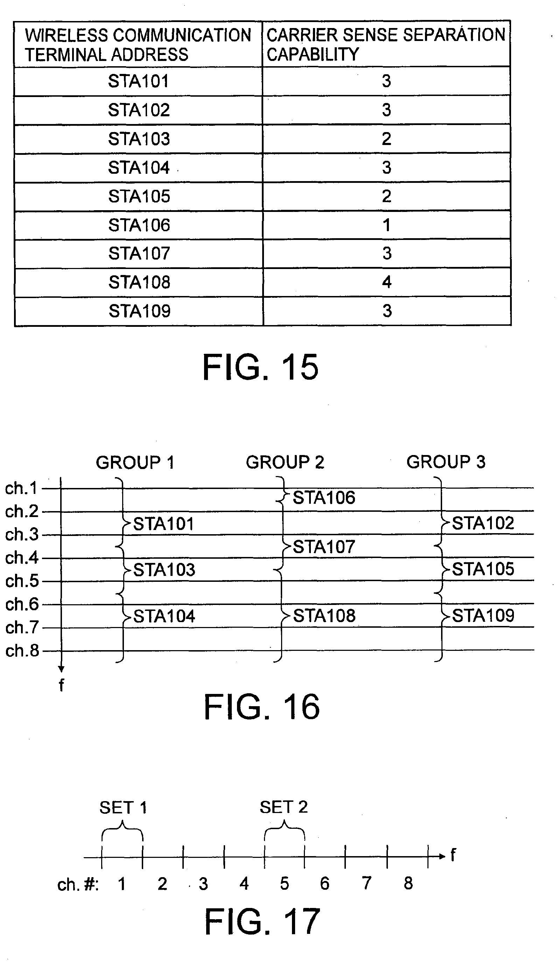

In the AP 100, information on the carrier sensing separation capability of associated terminals is assumed to be perceived as illustrated in FIG. 15, for example.

In the AP 100, at the time of implementing MU-MC by the use of the information on the carrier sensing separation capability of these associated terminals, candidates of a terminal group to which the AP 100 transmits frames at the same time or a terminal group from which the AP 100 receives frames at the same time are decided. This processing is performed by the MAC/PHY management unit 60 of the AP 100.

For example, as illustrated in FIG. 16, a case is considered where channels used as MU-MC in BSS 1 are the eight channels from ch.1 to ch.8 at maximum. In this case, there is a method of selecting, as much as possible, terminals as the same group such that the sum of the values of the carrier sensing separation capability of the selected terminals becomes equal to the maximum number of channels in use. The groups are generated such that all terminals subject to MU-MC can be covered. As described later, it may be allowed that the same terminal is included in different groups. The groups may be statically generated in advance and recreated whenever there is a change in terminals subject to performing MU-MC. Alternatively, it is possible to generate the group every time MU-MC downlink (or uplink) communication is performed or periodically at a certain time interval. It is preferable to assign to each terminal in each group a number of channels equal to the value of the carrier sensing separation capability of the terminal. By this means, in each channel assigned to each terminal, it is possible to determine whether the carrier sensing state is busy or idle, and, even in a state where a part of channels cannot be used due to a signal or noise, it is possible to realize effective communication excluding said part of channels.

In FIG. 16, group 1 consists of three terminals: the STA 101 with carrier sensing separation capability of 3; the STA 103 with carrier sensing separation capability of 2; and the STA 104 with carrier sensing separation capability of 3, and channels corresponding to the value of the carrier sensing separation capability are assigned to each of them. Similarly, group 2consists of the STA 106, the STA 107 and the STA 108, and group 3 consists of the STA 102, the STA 105 and the STA 109. For example, ch.1, ch.2, and ch.3 are assigned to the STA 101 of group 1, and, by assigning each of them to each of the channel sets, it is possible to perform carrier sensing for ch.1, ch.2 and ch.3 respectively and determine the busy/idle state thereof. Even in a state where part of the channels, for example, ch.1 cannot be used due to a signal or noise, it is possible to perform communication using ch.2 and ch.3.

In FIG. 16, although channels assigned to the terminals are consecutive channels, they do not have to be necessarily consecutive. For example, ch.1 and ch.5 may be assigned to the STA 103 of carrier sensing separation capability 2 as illustrated in FIG. 17. This is because, depending on the terminal, it may be preferable for channels to be separated and assigned according to the radio environment.

At the time of actually implementing MU-MC, although the AP 100 selects the group used in MU-MC, the MU-MC does not have to be necessarily implemented with all terminals in the selected group. The terminals in the same group selected in FIG. 16 are candidates, and, in a case where the group is selected, they do not necessarily become frame transmission destinations or frame transmission sources in MU-MC. When the AP 100 selects a group used to implement MU-MC, it may limit targeted terminals in the group. Alternatively, when requests of terminals which would like to implement MU-MC are received from the terminals, a group which most satisfies the requests may be selected, and MU-MC may be implemented for the terminals of the group that made the requests. In this case, it may be flexible and preferable that channels assigned to terminals used to perform MU-MC may be notified at the time of the start of MU-MC as compared with during the time the MU-MC is performed.

### [Sum of carrier sensing separation capability of terminals in group is equal to or less than carrier sensing separation capability value of base station itself.]

In a case where the maximum number of channels used in MU-MC is selected to be equal to or less than the value of carrier sensing separation capability of the AP 100, the sum of the carrier sensing separation capability values of terminals selected in each group is equal to or less than the carrier sensing separation capability value of the AP 100.

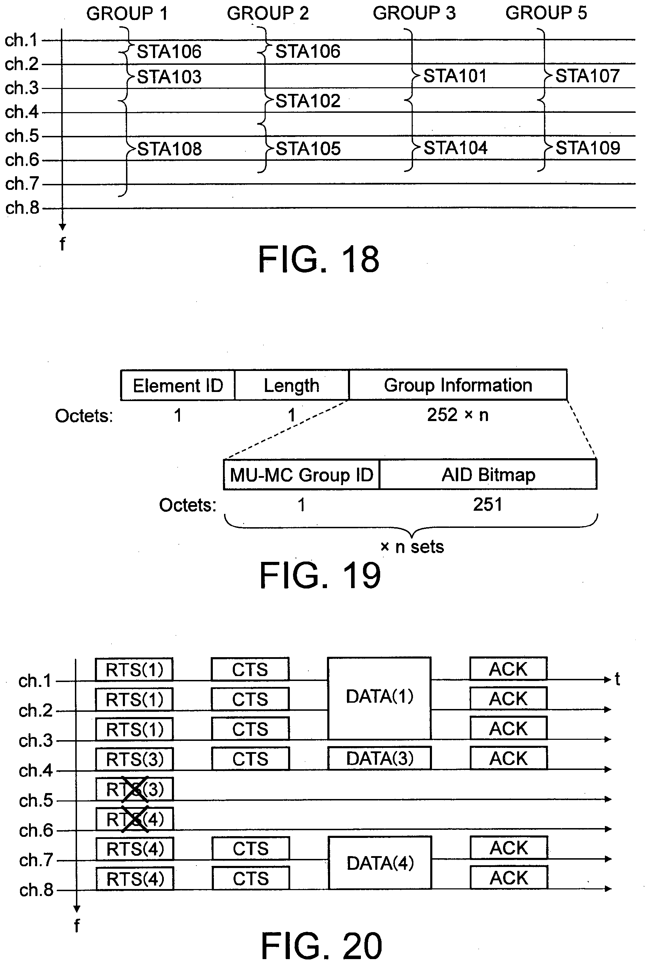

Alternatively, for example, although the maximum number of channels used for MU-MC, ch.1 to ch.8, is eight as illustrated in FIG. 18, the sum of the channels assigned to terminals in each group does not necessarily have to be equal to 8. Moreover, as mentioned above, the same terminal may be allowed to belong to a plurality of groups. In FIG. 18, the STA 106 belongs to group 1 and group 2. Even in this case, the sum of the carrier sensing separation capability values of terminals selected in each group is equal to or less than the carrier sensing separation capability value of the AP 100 itself.

### [Assignment of channels equal to or less than value of carrier sensing separation capability]

Although FIG. 16 to FIG. 18 illustrate an example of assigning to a terminal the same number of channels as that of the value of the carrier sensing separation capability of the terminal, effective channel use is ensured even by assigning a number of channels smaller than that of the carrier sensing separation capability of the terminal. In this case, it can be said that a terminal with higher carrier sensing separation capability is more flexible toward channel assignment and it can belong to more groups.

### [Notifying group related information]

Information on a group generated as above, terminals belonging thereto and channels assigned to the terminals in the group in some cases, may be notified in advance to terminals that are targets for performing MU-MC, before starting MU-MC. By this means, for example, the terminal may become aware, at the time of MU-MC being started, as soon as a group is designated from a base station, that the terminal itself is targeted for MU-MC or that it has the possibility to become a target, which has the advantage of allowing the terminal to, among others, make communication preparations. A terminal (at least in standby, as described below) may be presumed to assign channel sets to assigned channels, or, a base station may give instructions as to the correspondence of the channel sets and the channels when notifying the channel assignment to each terminal in a group. In a case where non-consecutive channels are assigned to terminals, assignment of different channel sets between non-consecutive channels may be an implicit condition and may be omitted from the instructions. It is efficient that information on the group is addressed only to a plurality of terminals that are targeted for implementing MU-MC (that is, the transmission destinations are multicast addresses) or is notified by a broadcast management frame. For example, the information may be included in a beacon frame, but a method of defining and using a new management frame or the like, so as to be able to adequately perform notification if necessary, is also possible. Both in a case where the information is included in the beacon frame or in the new management frame, the information is included in the frame body of the management frame, and, in the case of a management frame based on IEEE802.11 standard, the above-mentioned information element can be used.

Here, when the MAC addresses of terminals are notified as information of a created group and of the terminals belonging thereto, in a case where a MAC address is six octets as mentioned above, a field showing the information becomes long. Therefore, in a case where an identifier shorter than the MAC address is assigned to each terminal, and, when each terminal knows the assigned identifier, it is more effective when the identifiers are used instead of the MAC addresses. In IEEE802.11 standard, as mentioned above, an "AID" is assigned to each terminal of the BSS associated to the base station. Furthermore, it is more efficient to notify a plurality of "AIDs" at the same time instead of notifying each "AID" by individual fields. For example, a description method of the partial virtual bitmap field of the TIM (Traffic Indication MAP) element in IEEE802.11 standard may be reused.

FIG. 19 illustrates an example of an information element that notifies each group and terminals belonging thereto. Let us assume that it is, for example, an MU-MC group element. The field part of this information element is an integral (n) multiple of 1 or more of 252 octets. Each group and the terminals belonging thereto are notified every 252 octets. One octet of the first half of 252 octets is the "MU-MC Group ID" subfield, which shows the identifier of each group. For example, in a case where 1, 2, and so on, are sequentially assigned to the group identifiers, regarding the group with a group identifier of 1, the "MU-MC Group ID" subfield is set to 1, and, regarding the group with a group identifier of 2, the "MU-MC Group ID" subfield is set to 2, and so on. The "MU-MC Group ID" subfield in which each group identifier is set is followed by the 251-octet-long "AID Bitmap" subfield. In the "AID Bitmap" field, the bit position shows an "AID", and the "AIDs" of a plurality of terminals selected as a certain group are expressed. While the values 1 to 2007 are assigned to the "AIDs", 2008 bits can be expressed in the 251 octets of the "AID Bitmap" subfield. Therefore, by the terminal of "AID" = 1 referring to the position of Bit 1 of the "AID Bitmap" subfield and the terminal of "AID" = 2007 referring to the position of Bit 2007 of the "AID Bitmap" subfield, and so on, the subject terminal can determine whether it belongs to a group designated by the "MU-MC Group ID" subfield. Regarding the notification of information related to channels assigned to terminals in each group or the instructions on correspondence of channel sets and channels in each terminal, a new information element may be separately used as information on each group after an information element that notifies each group and its terminals is sent, or it may be included in an information element that notifies each group and its terminals.

Instead of FIG. 19, the "MU-MC Group ID" subfield may be omitted, and the AID bitmap may be disposed every 251 octets and assigned to group 1, group 2, and so on, automatically from the front. Moreover, the "Simultaneous Transmission Group ID" subfield may replace the "MU-MC Group ID" subfield. In that case, the subfield area is divided, and, for example, if the group identifier needs only 2 bits, identification information of a simultaneous transmission method may be stored in all or part of the remaining 6-bit space. In this case, instead of the MU-MC group element, the simultaneous transmission group element becomes the name of the information element, for example. In a case where, for example, the simultaneous transmission method is not only MU-MC but can also be MU-MIMO, it may be considered to include identification information as to whether the group supports both of them, whether the group supports only MU-MC or whether the group supports only MU-MIMO.

Moreover, the "AID Bitmap" subfield has been given 251 octets in order to enable that 2007, the maximum value of "AID" is expressed. Therefore, in a case where the AID of an actual target terminal does not reach the maximum value, the field length up to the maximum value of the "AID" may be notified. In a case where the field value can fluctuate, length of the following "AID Bitmap" subfield may be notified using part of the above-mentioned "MU-MC Group ID" or "Simultaneous Transmission Group ID" subfield. In a case where the length of the "MU-MC Group ID" or "Simultaneous Transmission Group ID" subfield length is not sufficient to notify the "AID Bitmap" subfield length, the "MU-MC Group ID" or "Simultaneous Transmission Group ID" subfield length may be extended from one octet such that it can be expressed. However, at least the "MU-MC Group ID" or "Simultaneous Transmission Group ID" subfield length should not be variable, but should be of a fixed length.

Moreover, a subfield (which may have the same format as the "AID Bitmap") showing whether the target terminal is assigned to at least one of the groups may be provided before the "MU-MC Group ID" or the "Simultaneous Transmission Group ID" subfield. By this means, only the corresponding terminal should process the remaining fields.

### [Assigning channels to legacy terminals]

Here, when channels are assigned to terminals, in a case where it is requested that a reference channel is fixed as BSS 1 and where a legacy terminal which cannot recognize MU-MC is involved, it is possible to implement DL-MU-MC with respect to a group including the legacy terminal. In such a case, the reference channel notified to the legacy terminal can be assigned as a channel to the legacy terminal in DL-MU-MC. Since, as mentioned above, it is possible to set the carrier sensing separation capability value to 2, in the case of a legacy terminal that can support a 80 + 80 MHz channel extension, in this case, the reference channel and extension channel (two channels which are shown as primary and secondary in FIG. 32 and FIG. 33, for example) which are notified to the legacy terminal may be assigned. Furthermore, if the legacy terminal can also recognize a channel of secondary40 in addition to channels of primary and secondary in FIG. 32 and FIG. 33, it is possible to also assign the channel to the legacy terminal. However, it is not preferable because channel utilization efficiency declines in a case where part of channels cannot be used due to a signal or noise.

### <Grouping according to whether carrier sensing separation capability is possible up to CCA level or carrier sensing separation capability is possible up to NAV level>

In a case where a base station distinctively perceives whether the carrier sensing separation capability of a terminal is up to the CCA level or the carrier sensing separation capability of the terminal is up to the NAV level, the information may be reflected when performing grouping. For example, it can be said that, in a case of communication using a plurality of channels at the same time, a terminal with carrier sensing separation capability up to the NAV level can minimize a risk of causing interference with other wireless communication systems operated in a part of the plurality of channels, and is therefore suitable for coexistence. In order to enhance communication efficiency per area and improve throughput in an area in which wireless communication systems coexist, when a terminal of one wireless communication system performs transmission without detecting the NAV on another wireless communication system, retransmission by a terminal which has performed transmission in the other wireless communication system, should be avoided as much as possible. Therefore, it is desirable that the terminals with the carrier sensing separation capability up to the NAV level are assigned to have more channels to be used at the same time than the terminals with the carrier sensing separation capability up to the CCA level. Moreover, in a case where it is known that there is another wireless communication system operating in a part of the plurality of channels used at the same time for MU-MC, it is preferable to prioritize the assignment of the terminal with the carrier sensing separation capability up to the NAV level to those channels.

### <MU-MC operation>

Next, a case is described where MU-MC is actually executed. FIG. 20 illustrates an example where the AP 100 executes MU-MC operation with group 1: the STA 101 with a carrier sensing separation capability value of 3, the STA 103 with a carrier sensing separation capability value of 2 and the STA 104 with a carrier sensing separation capability value of 3. It can be said that the direction of data transmission is DL-MU-MC since data is stored in a data frame and transmitted to the STA 101, the STA 103 and the STA 104 from the AP 100. However, since a CTS frame, corresponding to an RTS frame from the AP 100, is transmitted from the STA 101, the STA 103, and the STA 104 to the AP 100 and since an ACK frame, corresponding to the data frame, is similarly transmitted from the STA 101, the STA 103, and the STA 104 to the AP 100, it can be said that UL-MU-MC is also performed. Therefore, according to the direction in which the MPDU or PPDU is transmitted, it can be said that the MU-MC is implemented both in the uplink and the downlink.

A number of channels equal to the value of the carrier sensing separation capability are assigned to each terminal. In such a case, if standby channels are defined in advance like ch.1 to ch.3 for the STA 101, ch.4 and ch.5 for the STA 103 and ch.6 to ch.8 for the STA 104, each terminal can receive a frame addressed to it by the standby channels. In FIG. 20, the value X of "RTS(X)" means that the destination address (RA) of the RTS frame is STA 10X.

Here, for example, in a case where all terminals can support a number of channels equal to or greater than the total number of channels used in MU-MC, such as having a carrier sensing separation capability value of 8 or more, in all channels used in MU-MC, each terminal can determine whether the carrier sensing state is busy or idle for every channel. That is, the terminals are able to respectively assign channel sets to each channel and be in a standby state at each of the channel sets. In this case, even if standby channels are not specifically designated to every terminal (even if it is not known beforehand which channel transmits a frame addressed to the subject terminal), each terminal can receive a frame addressed to it.

Here, it is assumed that, each terminal, for every channel assigned from a base station, assigns a channel set for which it can be determined whether the carrier sensing state is busy or idle and is on standby. In the STA 101, as illustrated in FIG. 20, frames addressed to it are normally received in ch.1, ch.2 and ch.3. When it is determined that each of them is an RTS frame and that, for each of the RTS frame, a CTS frame should be transmitted as a response, the CTS frames are simultaneously transmitted to the AP 100 using ch.1, ch.2 and ch.3.

Although RTS frames are transmitted in ch.4 and ch.5 to the STA 103, the STA 103 can onlydetermine that the frame of ch.4 is an RTS frame, and that a CTS frame with respect thereto should be transmitted in response. Regarding the frame in ch.5, it is assumed that, for example, it was determined that it could not be correctly received due to interference or the like, or it was determined that, despite of being recognized as an RTS frame, a carrier sensing requirement was not satisfied, and, therefore, a CTS frame with respect thereto cannot be transmitted as a response.

At the STA 104, it is determined that the frames in ch.7 and ch.8 are RTS frames, and that CTS frames with respect thereto are to be transmitted in response. However, regarding the frame in ch.6, it is assumed that, for example, it was determined that it could not be correctly received due to interference or the like, or it was determined that, despite of being recognized as an RTS frame, a carrier sensing requirement was not satisfied, and, therefore, a CTS frame with respect thereto cannot be transmitted as a response.

As a result, from the received CTS frames, the AP 100 determines which channels can be used to transmit data frames. Regarding the STA 101, since it is possible to transmit the data frame using all of ch.1 to ch.3, for example, these three channels are bonded and treated as one channel, and the data frame is transmitted to the STA 101 (in FIG. 20, this data frame is referred to as "DATA(1)"). Regarding the STA 103, the AP 100 determines that it is possible to use only ch.4, and transmits a data frame directed to the STA 103 by using only ch.4 (this data frame is referred to as "DATA(3)" in FIG. 20.). Regarding the STA 104, the AP 100 determines that it is possible to use ch.7 and ch.8, and, since it is possible to perform transmission using the two consecutive channels of ch.7 and ch.8, for example, these two channels are bonded and treated as one channel, and the data frame is transmitted to the STA 104 (in FIG. 20, this data frame is referred to as "DATA(4)"). Furthermore, since each terminal correctly receives these data frames transmitted from the AP 100, an ACK frame is transmitted from each of the terminals. In the case of STAs 101 and 104 where a plurality of channels are used, the ACK frame is transmitted as a duplicate PPDU (each PPDU carrying an ACK frame is referred to as "ACK" in FIG. 20).

### [Each channel set is separated into channels in standby state but channel sets are shared at the time of data frame exchange]

Here is discussed the manner of a terminal handling a channel set before and after a channel to actually exchange data frames between a base station is fixed (for example, in FIG. 20, the time before and after a CTS frame is transmitted to the AP 100).

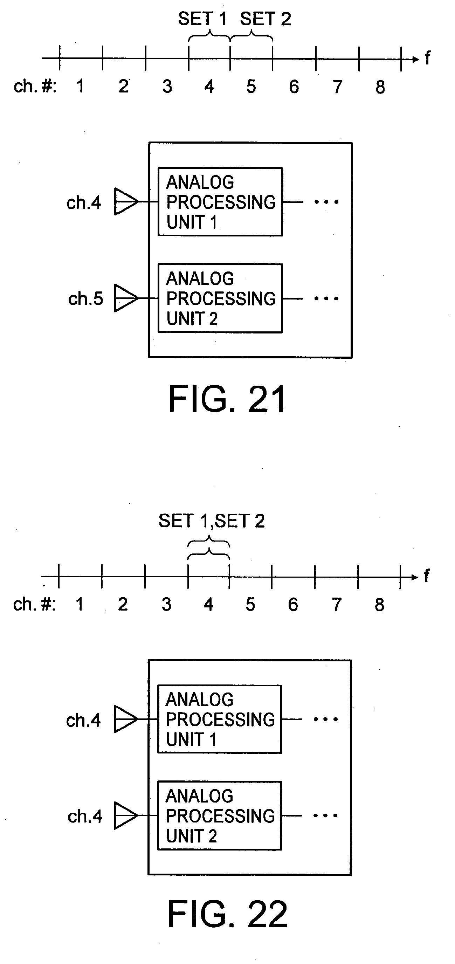

Based on the example of the STA 103 in FIG. 20, the AP 100 assigns ch.4 and ch.5 to the STA 103 of a carrier sensing separation capability value of 2. Therefore, at least in standby state, as illustrated in FIG. 21, the STA 103 assigns, to ch.4, one channel set (channel set 1) in which it is possible to determine whether the carrier sensing state is busy or idle, and assigns, to ch.5, the other channel set (channel set 2) in which it is possible to determine whether the carrier sensing state is busy or idle. Regarding the configuration of the STA 103, for example, as the configuration shown in the lower part of FIG. 21, the analog processing unit 1 is assigned to ch.4 and the analog processing unit 2 is assigned to ch.5.

Furthermore, when the RTS frame illustrated in FIG. 20 is received, since it is possible to determine that, for the STA 103, only ch.4 can be used at this stage, both channel set 1 and channel set 2 are assigned to ch.4 as illustrated in FIG. 22. Regarding the configuration of the STA 103, for example, as the configuration shown in the lower part of FIG. 22, both the analog processing unit 1 and the analog processing unit 2 are assigned to ch.4.

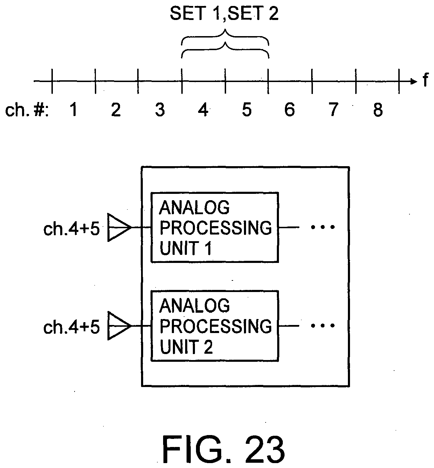

If it is determined that both ch.4 and ch.5 can be used in the STA 103, both channel set 1 and channel set 2 can be assigned to ch.4 and ch.5 as illustrated in FIG. 23. Regarding the configuration of the STA 103, for example, as the configuration shown in the lower part of FIG. 23, both the analog processing unit 1 and the analog processing unit 2 are assigned to ch.4 and ch.5.

Thus, at the stage at which channels to be used are fixed, by assigning a plurality of channel sets in each of which it is possible to determine whether the carrier sensing state is busy or idle to the fixed consecutive channels entirely, it becomes possible to perform transmission and reception in a plurality of antennas, and it is possible to acquire a diversity effect by reception from the plurality of antennas. Here, when the channels to be used are fixed, even if it is determined that both ch.4 and ch.5 can be used, it is also possible to assign each channel set to each channel, as illustrated in FIG. 21, without performing the assignment illustrated in FIG. 23.

Moreover, also at the AP 100, if channels sets in each of which it is possible to determine whether the carrier sensing state is busy or idle are respectively assigned to ch.4 and ch.5, by fixing the channels in use by the reception of a CTS frame from the STA 103, at the time of transmitting a data frame, these channel sets can be assigned to the fixed consecutive channels entirely as done by the STA 103 in FIG. 22 or FIG. 23. Therefore, transmission and reception using the plurality of antennas becomes possible in both the AP 100 and the STA 103, and, if it is known that the assignment of channel sets to channels is changed before and after fixing of channels which can be used in this way in both sides (the AP 100 and the STA 103), it may be possible to acquire, thanks to MIMO communication or the like, increased speed and robustness at the time of exchanging data frames.

Here, in a case where non-consecutive channels are assigned and it is determined that the non-consecutive channels are to be used, one channel set may be assigned to a frequency band that covers these channels. However, in view of the ability to correctly separate the channels, it is desirable that one channel set is assigned to one channel.

### <Relationship between channel numbers in actual standard and channel numbers in example>

Although mentioned earlier that a channel in a channel set, in which it is possible to determine whether the carrier sensing state is busy or idle, is one or two or more consecutive channels, the consecutiveness will be further described.

The channel numbers in the IEEE802.11 standard are provided at 5 MHz intervals, therefore, in the case of a channel width of 20 MHz, an interval between channel numbers at which channels do not overlap is 4. In the present example, consecutive channels in a channel set mean consecutive channels that do not overlap. The channel numbers in the example are for convenience, and ch.1 should be interpreted as channel number 36 in the 5 GHz band in the IEEE802.11 standard and ch.2 should be interpreted as channel number 40 in the 5 GHz band in the IEEE802.11 standard.

### [5 GHz band]

In the 5 GHz band of IEEE802.11 standard, since channel numbers are basically used at 20 MHz intervals, there is no problem in using the channels based on the actually used channel numbers.

### [2.4 GHz band]

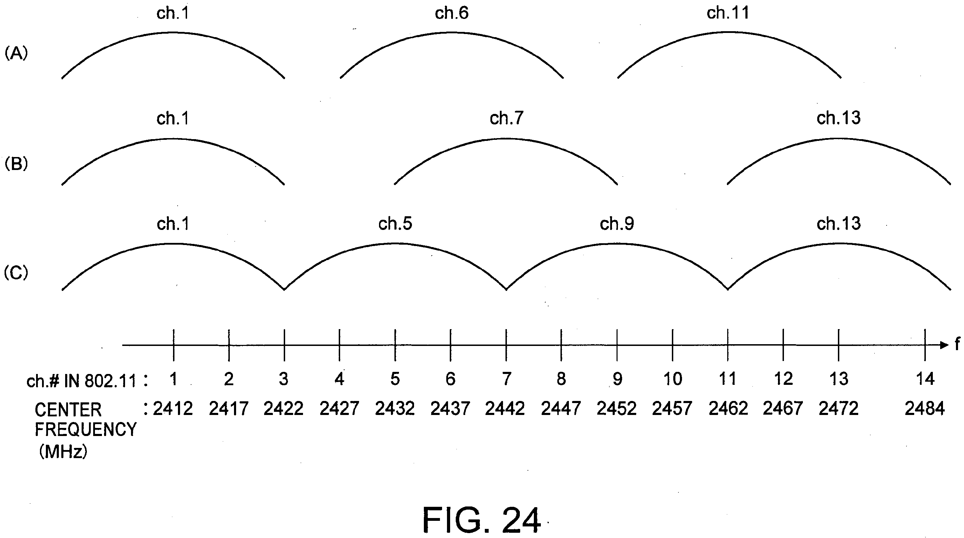

On the other hand, in the 2.4 GHz band, as illustrated in FIG. 24, reference channel selection is performed at 25 MHz intervals (FIG. 24(A)) in such as North America and China, and at 30 MHz intervals (FIG. 24(B)) in Europe. Therefore, it may be performed at 25 MHz intervals (FIG. 24(A)) mirroring the selection for North America and China where, for example, ch.1 in the example may be set to channel number 1 in the 2.4 GHz band in IEEE802.11 standard and ch.2 may be set to channel number 6 in the 2.4 GHz band in IEEE802.11 standard. Alternatively, it may be performed at 30 MHz intervals (FIG. 24(B)) mirroring the selection for Europe where, for example, ch.1 in the example is set to channel number 1 in the 2.4 GHz band in the IEEE802.11 standard and ch.2 is set to channel number 7 in the 2.4 GHz band in the IEEE802.11 standard. Alternatively, as illustrated in FIG. 24(C), mirroring the 20 MHz channel intervals in the 5 GHz band, ch.1 in the example may be set to channel number 1 in the 2.4 GHz band in IEEE802.11 standard and ch.2 may be set to channel number 5 in the 2.4 GHz band in IEEE802.11 standard. FIG. 24(C) exemplifies a future possible channel selection other than the ones in FIG. 24(A) and FIG. 24(B). However, in the case of such as North America, China and Europe, when another wireless communication system selects, as at least part of the channels, channel number 6 or 7 in the 2.4 GHz band, the frequency band partially overlaps with that of channel number 5. In this case, a frequency band in which mutual wireless communication systems influence each other broadens, and channel utilization efficiency decreases.

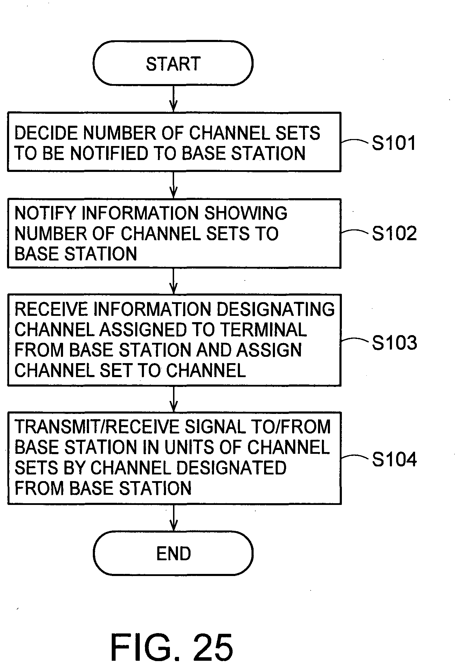

FIG. 25 illustrates a flowchart of a basic operation example of a terminal according to the present example.

The terminal decides a value (S101) to be notified to a base station as the number of channel sets which the terminal can support (carrier sensing separation capability). As the value to be notified to the base station, the terminal may decide the maximum number of channel sets which the terminal can support, or may decide a value less than the maximum number on the basis of conditions such as its remaining battery power and the communication data amount. The maximum value of the number of the channel sets which the terminal can support may be held in a memory in a fixed manner or acquired from the exterior (for example, a higher layer, an external device, and so on) by another method.

The terminal transmits information showing the number of channel sets decided in this way to the base station (S102). For example, the terminal may notify the number of channel sets to the base station by including the number of channel sets in an association request frame transmitted for connection with the base station, or may notify it to the base station by another management frame. Here, in the present example, although a case has been described above where the number of channel sets (carrier sensing separation capability) is notified to the base station by a management frame, it does not exclude a case where it is notified by other frames such as a data frame.

Information that designates channels assigned to the terminal is notified from the base station to the terminal, and the terminal assigns channel sets to the channels designated by the information (S103). At this time, it may be presumed that channel sets are assigned to each of the designated channels, or, a notification of correspondence information that designates the correspondence between the channels and the channel sets may be received from the base station and the channel sets may be assigned to the channels according to the correspondence information. The information that designates the channels assigned to the terminal or the information on the correspondence between the channels and the channel sets may be notified from the base station by an association response frame in response to an association request, may be notified by a beacon frame, or may be notified by a newly defined management frame. The terminal performs communication with the base station by transmitting and receiving signals to/from the base station in units of channel sets assigned to the channels designated by the base station (S104).

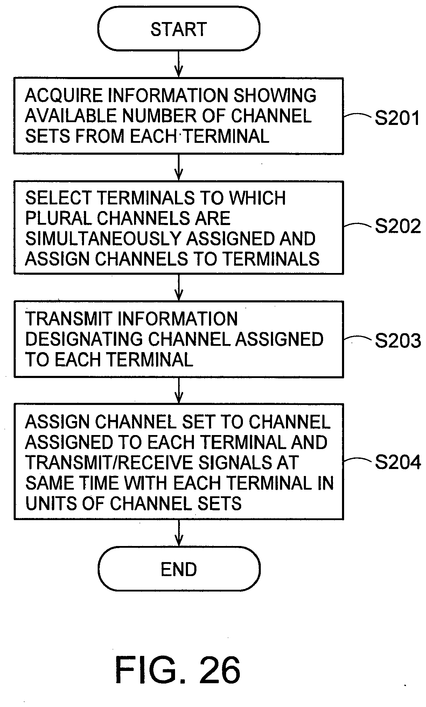

FIG. 26 illustrates a flowchart of a basic operation example of the base station according to the present example.

The base station receives information showing the number of channel sets (carrier sensing separation capability) which can be supported, from each terminal (S201). For example, the base station receives an association request frame from a terminal that requests connection with the base station, and extracts the information from the association request frame. A configuration in which the information is acquired from other management frames, such as a reassociation request frame, and a configuration in which the information is acquired from other kinds of frames, such as a data frame, are also possible.

The base station assigns a channel from a plurality of channels supported by the base station to each terminal on the basis of the information acquired from each terminal (S202). Specifically, terminals to which said plurality of channels are assigned at the same time are selected as a group, and the plurality of channels are assigned to the terminals of the selected group.

The base station notifies, to each terminal, information that designates channels assigned to each terminal, by a frame such as a management frame (S203). For example, in the case of receiving information showing the number of channel sets by an association request frame from the terminal, information that designates channels assigned to the terminal is included in an association response frame. Alternatively, the base station may decide, for each terminal, channels assigned to a terminal and channel sets to be assigned to the channels, and notify the correspondence information on these channels and channel sets to each terminal.

The base station assigns channel sets to channels assigned to each terminal in the selected group, and, by transmitting and receiving signals to/from each terminal in units of channel sets, performs communication with each terminal (S204).

As described above, according to the present example, when each terminal notifies the number of channel sets (for example, the maximum number) that can be set at each terminal to the other terminal, the other terminal can appropriately perform channel assignment to each terminal and perform MU-MC communication of increased channel utilization efficiency. Moreover, when the other terminal is a base station, a wireless communication group including the base station becomes easy to manage and operate.

Moreover, in each terminal, it is possible to separately perform transmission and reception of signals by each channel set and to know, in units of a channel set, whether the carrier sensing state is busy or idle. Therefore, in an environment with an assumption of carrier sensing, even if a subset of the channel sets is busy, efficient communication is possible using other channel sets.

Moreover, in a case where each terminal receives, from the above-mentioned other terminals information showing that the MU-MC communication scheme is enabled, efficient information transmission becomes possible by notifying information showing the number of channel sets to the other terminals.

Moreover, when the above-mentioned other terminal includes the information showing that the MU-MC communication scheme is enabled in a beacon frame or probe response frame and notifies it, even a terminal before connection with a wireless communication group including the other terminal can know whether the wireless communication group supports the MU-MC communication scheme.

### (Second Example)

The second example is basically based on the first example, and therefore only the difference between the present example and the first example is described.

In the second example, in a case where the base station can support MU-MC, the base station requires a terminal that requests connection with the base station to have a minimum carrier sensing separation capability value.

When the MAC/PHY management unit 60 of the base station implements MU-MC in a wireless communication system (BSS), it decides a minimum carrier sensing separation capability value in order to increase channel utilization efficiency. For example, this minimum carrier sensing separation capability value may be 2. Similarly to a case where a base station notifies information that MU-MC is supported or a case where a terminal notifies the carrier sensing separation capability of the terminal in the first example, this value is held, for example, in a MIB or memory of the base station. The memory is incorporated in the MAC common processing unit 20 or separately provided. Taking into account that the required minimum carrier sensing separation capability value changes according to the usage form of the BSS, the traffic characteristics or the like, it is desirable that this value is rewritable.

The base station includes this required minimum carrier sensing separation capability value in a beacon frame or probe response frame and transmits it. A processing method of including the information in the frame in the base station and a notification method of the information in the frame is similar to a case where a base station notifies that MU-MC is supported or a case where a terminal notifies the carrier sensing separation capability of the terminal in the first example.

In a case where information on the minimum carrier sensing separation capability value is included in the beacon frame or probe response frame, the base station may or may not include the information that MU-MC is supported.

At the stage when a terminal searches (scans) for a base station to connect to and it receives the beacon frame or probe response frame containing the minimum carrier sensing separation capability value, it holds information on the minimum carrier sensing separation capability value together with the identifier of the base station. It is preferable that it is held in the MAC/PHY management unit 60 in the configuration in FIG. 1. The MAC/PHY management unit 60, when selecting a base station to connect to from a plurality of candidate base stations, for base stations that notified their minimum carrier sensing separation capability values, takes into account whether the carrier sensing separation capability of the terminal satisfies the minimum value given from such base station. That is, the carrier sensing separation capability of the terminal is read out from the held memory area and compared with the minimum carrier sensing separation capability value required by the base station. If the capability value is equal to or greater than a required value, the base station is left as a candidate to connect to. Alternatively, if the capability value is less than the required value, it may be determined to connect with the base station without requesting MU-MC.

In a case where a terminal to be connected with a base station is requested to support MU-MC, for example, the next technique is used. The supported rates element that notifies a basic rate at which the base station has to support transmission and reception to join the BSS is provided in IEEE802.11 standard. This is included in a beacon frame, a probe response frame or the like. Specifically, the basic rate can be identified by applying "1" to the MSB bit of a field that shows each rate value. If one or a plurality of basic rates are set to this supported rates element, the terminal requesting the connection can output a connection request to the base station only in a case where all basic rates are satisfied. Therefore, it only has to newly define an unused value for MU-MC as a rate value and show that it is a basic rate in the supported rates element.

As described above, according to the present example, in a case where the maximum number of channel sets that can be processed in each terminal satisfies the minimum number (minimum carrier sensing separation capability value) which is requested by the other terminal (such as a base station), by notifying information showing the maximum number of channel sets, the other terminal can efficiently collect capability information on each terminal.

### (Third Example)

The third example is basically based on the first and second examples, and therefore only the differences between the present example and the aforementioned two examples are described.

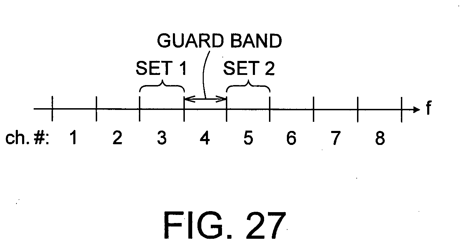

The third example describes a situation where, in a case where a terminal has carrier sensing separation capability of a value of 2 or more and channel sets for which it is possible to determine whether the carrier sensing state is busy or idle are assigned to respective channels, a guard band (gap in frequency) is necessary between the channel sets. The terminal notifies information related to the guard band to the base station according to whether the guard band is necessary. The guard band is a gap in the frequency domain provided between channel sets as illustrated in FIG. 27.

For example, in a case where the guard band is necessary for a terminal, if the minimum necessary guard band is defined in the standard or the specification, the terminal may notify only a guard band request together with the carrier sensing separation capability value. In a case where the guard band is not necessary, no information, including information showing that the guard band is unnecessary, has to be notified.

In a case where it is presumed that the guard band is necessary for terminals but if not necessary, that will be an extension function, a value in accordance with the necessity may be set in a field (a 1-bit field is enough) for notification to the base station. For example, the presence of a guard band request may be defined as the default "0" (the same value as "Reserved") and the absence of a guard band request may be defined as "1".

Alternatively, only when the guard band is necessary, the terminal may notify the guard band request together with the carrier sensing separation capability value. In this case, in the field (a 1-bit field is enough) for notification to the base station, the absence of the guard band request may be defined as "0" (the same value as "Reserved") and the presence of the guard band request may be defined as "1".

In a case where the guard band is necessary, and moreover the terminal has to notify a necessary guard band width, the guard band request and the necessary guard band width information are included in a frame.

Alternatively, as described above, in a case where it is presumed that the guard band is necessary for terminals, only the necessary guard band width information may be included, without including information on the presence/absence of the guard band request.

The method of notifying the guard band request may conform to a case where the terminal notifies the carrier sensing separation capability value in the first example.

On the base station side, grouping for MU-MC is performed taking into account the presence/absence of the guard band request of each terminal. Specifically, channel assignment to each terminal is performed such that the guard band request of each terminal is satisfied, and terminals belonging to each group are selected accordingly.

As described above, according to the present example, when each terminal notifies information related to the guard band to the other terminal (such as a base station) according to the necessity of the guard band, the other terminal having received the information can appropriately assign a plurality of channels to each terminal on the basis of the information and increase the utilization efficiency of the plurality of channels.

### (Fourth Example)

The fourth example is basically based on the first to third examples, and therefore only the differences between the first example and the aforementioned three examples are described.

In the fourth example, the frequency width of a channel set in which it is possible to determine whether the carrier sensing state is busy or idle is limited.

For example, this frequency limitation width can be expressed in a channel width unit or by an actual frequency bandwidth. In the case of the channel width unit, information on the frequency limitation width being equal to a certain number of channels may be held in a terminal. In the case of the actual frequency bandwidth, information on the frequency limitation width, in the form of an amount of MHz, may be held in the terminal. The holding method is similar to the one in which a terminal holds the carrier sensing separation capability value in the first example.

The frequency width limitation is preferable to be shared by the channel sets but it may be allowed to differ. In that case, it can notify correspondence information that associates frequency widths and channel sets (for example, how many channel sets correspond to frequency width 1, how many channel sets correspond to frequency width 2) to the base station.

Moreover, when there is a restriction on the position of frequency assigned to every channel set in which there is a limitation on the frequency width, it can notify correspondence information that puts in correspondence the range of frequency correspondence, the frequency width and the channel sets (for example, how many channel sets correspond to frequency correspondence range 1 and frequency width 1, how many channel sets correspond to frequency correspondence range 2 and frequency width 2) to the base station.

In a case where the frequency width limitation is given as a mandatory value in the standard or specification, the terminal notifies the number of channel sets that satisfy or exceed the mandatory value to the base station as a carrier sensing separation capability value. Regarding a channel set of a mandatory frequency width in the standard or specification, its frequency width may not be notified, and, in a case where the terminal can support a wider frequency width, the frequency width information may be notified to the base station.

A method of notifying the frequency widths of channel sets in each of which it is possible to determine whether the carrier sensing state is busy or idle may conform to a case where a terminal notifies the carrier sensing separation capability value in the first example.

While also taking into account the limitation of the frequency widths of channel sets in each of which it is possible to determine whether the carrier sensing state of each terminal is busy or idle, the base station performs grouping for MU-MC. Specifically, channel assignment to each terminal is performed such that the limitation on the frequency widths of channel sets at each terminal is satisfied, and terminals belonging to each group are selected accordingly.

As described above, according to the present example, each terminal notifies information showing the maximum number of channels or channel width which can be consecutively taken in a channel set to the other terminal (such as a base station). By this means, even in a case where the maximum channel number or channel width which can be consecutively taken in a channel set is limited by the configuration of hardware in each terminal, the other terminal can appropriately assign a plurality of channels to the terminal and increase the utilization efficiency of the plurality of channels.

### (Fifth Example)

In the fifth example, a base station collects information on the accuracy of SIFS in each terminal and performs grouping for simultaneous reception from a plurality of terminals.

For example, in FIG. 20, although a base station receives CTS frames from a plurality of terminals at the same time and receives ACK frames from the plurality of terminals at the same time, these response frames are transmitted after SIFS from a frame that induces the responses before those. Although the terminals monitor the timing of SIFS, due to, for example, the processing delay in each terminal and the propagation delay due to the distance from each terminal to the base station, strictly speaking, the intervals between SIFS slightly differ among terminals. From the viewpoint of the base station, when frames are received from a plurality of terminals, in order to correctly perform reception processing in the PHY processing unit 50 and the MAC processing unit 10 according to the reception processing in FIG. 1, it is preferable to group terminals of which the intervals of SIFS are as close as possible. This is a common problem not only in the case of MU-MC but also in that of MU-MIMO, when simultaneous uplink reception from a plurality of terminals is performed after SIFS.

Therefore, before starting MU-MC or MU-MIMO which simultaneously performs uplink reception from the plurality of terminals after SIFS, the base station collects the SIFS values from each terminal and reflects it when grouping. Specifically, when selecting terminals to belong to a group, at least one of the conditions is that terminals of close SIFS values be selected.

For example, when a base station transmits an association response frame that allows connection to each terminal, it starts to receive an ACK frame from each terminal after SIFS. Therefore, for every terminal, the base station collects and holds a time interval up to the reception of the ACK frame after the association response frame is transmitted. The holding method may be similar to one in which a base station holds the carrier sensing separation capability of each terminal in the first example.

The base station needs to be provided with a clock of as high accuracy as to be able to ascertain the accuracy of SIFS. Moreover, since a specified value of SIFS is determined, it is possible to decrease the stored amount by devising so that the held value shows the negative or positive difference from the specified value instead of holding the SIFS value in each terminal as is.

Although not an association process, since SIFS is also used at the time of normal data frame exchange with each terminal in a one-to-one correspondence (for example, the time from a data frame transmission until reception of an ACK frame or BA frame), the SIFS value may be collected, held or updated at that time. For example, as mentioned above, the SIFS value may be collected in the association process and updated at the time of the data frame exchange with each terminal in a one-to-one correspondence. When MU-MC or MU-MIMO which simultaneously performs uplink reception from a plurality of terminals after SIFS is started, in a case where it was not possible to correctly receive frames from the plurality of terminals, an operation to re-collect the SIFS values may be performed. In a case where data is transmitted to each terminal, the collection may be performed by implementing one-to-one data frame exchange with each terminal. Alternatively, a unicast management frame to re-collect the SIFS values (that is, a response is induced in SIFS) may be transmitted to each terminal and the SIFS value may be collected.

### (Sixth Example)

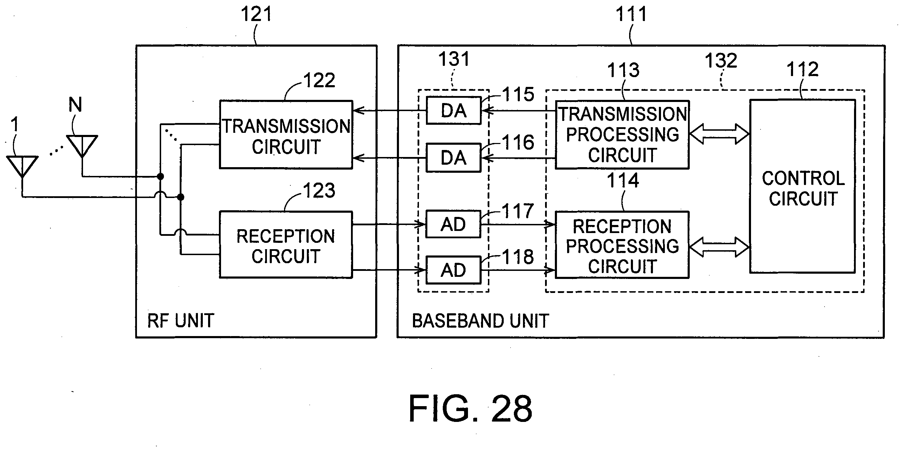

FIG. 28 illustrates a hardware configuration example of a wireless communication device provided in a terminal (which may indicate a base station) according to the sixth example. This hardware configuration is one example, various changes being applicable to the hardware configuration. Since the operation of the wireless communication device illustrated in FIG. 28 is similar to the wireless communication device described above in FIG. 1, the description below is centered on the differences in hardware configuration and detailed operation explanations have been omitted.

This wireless communication device includes a baseband unit 111, an RF unit 121 and antennas 1 to N.

The baseband unit 111 includes a control circuit 112, a transmission processing circuit 113, a reception processing circuit 114, DA conversion circuits 115 and 116 and AD conversion circuits 117 and 118. The RF unit 121 and the baseband unit 111 may be collectively configured as IC (Integrated Circuit) chip or may be configured as individual chips.

As one example, the baseband unit 111 is a baseband LSI or a baseband IC or both of them. Alternatively, as shown by a dotted line frame in the figure, the baseband unit 111 may include an IC 132 and an IC 131. At this time, the circuits may be divided between each IC such that the IC 132 includes the control circuit 112, the transmission processing circuit 113 and the reception processing circuit 114, while the IC 131 includes the DA conversion circuits 115 and 116 and the AD conversion circuits 117 and 118.

The control circuit 112 chiefly executes the functions of the MAC processing unit 10 and the MAC/PHY management unit 60.

The function of the upper layer processing unit 90 may be included in the control circuit 112. The transmission processing circuit 113 corresponds to a component that performs processing on the transmission side of the PHY processing unit 50 illustrated in FIG. 1. That is, the transmission processing circuit 113 performs processing such as adding, coding and modulation of preamble and PHY header, and creates, for example, two kinds of digital baseband signals (hereafter, referred to as a digital I signal and a digital Q signal). Here, a configuration is possible in which the function of the transmission processing unit 30 in FIG. 1 is included in the transmission processing circuit 113, the function of the reception processing unit 40 is included in the reception processing circuit 114 and the functions of the MAC common processing unit 20 and the MAC/PHY management unit 60 are included in the control circuit 112.

The communication processing device of the present example corresponds, for example, to the control circuit 112, the transmission processing circuit 113 and the reception processing circuit 114. Especially in the case of a non-base station terminal, it corresponds at least to the transmission processing circuit 113 in connection to a notifying unit that notifies information to a base station via a management frame, and, in the case of a base station, it corresponds to at least the reception processing circuit 114 and the control circuit 112 in connection to a receiver that receives information via a management frame from the terminal and to a management unit that performs channel assignment. The communication processing device of the present example includes both a one-IC chip mode and a multi-IC chip mode. The integrated circuit or integrated circuitry according to the present example may include a processor that performs all or a part of the processing in the baseband unit 111, that is, all or a part of the processing in the control circuit 112, the transmission processing circuit 113, the reception processing circuit 114, the DA conversion circuits 115 and 116, and the AD conversion circuits 117 and 118.

The DA conversion circuits 115 and 116 correspond to parts that perform DA conversion of the analog processing unit 70 illustrated in FIG. 1. The DA conversion circuits 115 and 116 subject signals input from the transmission processing circuit 113 to the DA conversion. More specifically, the DA converting circuit 115 converts the digital I signal into an analog I signal, the DA converting circuit 116 converts the digital Q signal into an analog Q signal. Note that the analog signals may be transmitted with a single-line (single-system) signal as is without the quadrature modulation. In this case, the number of DA converting circuits may be one. In addition, in the case where signals to transmit are in single-line or multiple lines, the signals are transmitted after being distributed to a plurality of antennas, DA converting circuits may be provided corresponding to the number of antennas.

The RF unit 121 is, as one example, an RF analog IC or a high frequency IC. A transmission circuit 122 in the RF unit 121 corresponds to a part that performs processing at the time of transmission at a post-DA conversion stage in the analog processing unit 70 illustrated in FIG. 1. The transmission circuit 122 includes a transmission filter that extracts a signal of a desired band from signals of the frames subjected to DA conversion by the DA conversion circuits 115 and 116, a mixer that performs up-conversion of the filtered signal into a radio frequency by the use of a signal of a constant frequency supplied from an oscillator, and a preamplifier (PA) that amplifies the signal after up-conversion, and so on.

A reception circuit 123 in the RF unit 121 corresponds to a part that performs processing at the time of reception up to the stage before AD conversion in the analog processing unit 70 illustrated in FIG. 1. The reception circuit 123 includes an LNA (low-noise amplifier) that amplifies a signal received by an antenna, a mixer that down-converts the amplified signal into a baseband by the use of a signal of a constant frequency supplied from an oscillator, and a reception filter that extracts a signal of a desired band from the down-converted signal, and so on. More specifically, the reception circuit 123 subjects the received signals that is subjected to low-noise amplification by a low noise amplifier (not shown) to quadrature demodulation with carriers the phase difference between which is 90° to create the I (In-phase) signal being in phase with the received signal and the Q (Quad-phase) signal with a phase delayed by 90° from the I signal. These I signal and Q signal are adjusted in gain and output from the reception circuit 123.

The control circuit 112 may control the operations of the transmission filter of the transmission circuit 122 and of the reception filter of the reception circuit 123 such that, according to the setting of a used channel set, a signal of a channel covered by the channel set is extracted. Similar control may be performed by the control circuit 112 giving instructions to another controlling unit which controls the transmission circuit 122 and the reception circuit 123.

The AD conversion circuits 117 and 118 in the baseband unit 111 correspond to a part that performs DA conversion in the analog processing unit 70 illustrated in FIG. 1. The AD conversion circuits 117 and 118 perform AD conversion on an input signal from the reception circuit 123. More specifically, the AD converting circuit 117 converts an I signal into a digital I signal, and the AD converting circuit 118 converts the Q signal into a digital Q signal. Note that the analog signals may be received with a single-line signal without the quadrature modulation. In this case, the number of the AD converting circuits may be one. In addition, in the case where a plurality of antennas are provided, AD converting circuits corresponding in number to the antennas may be provided. The reception processing circuit 114 corresponds to a part that performs processing on the reception side of the PHY processing unit 50 illustrated in FIG. 1. That is, the reception processing circuit 114 performs processing such as demodulation, decoding and preamble and PHY header removal on the signal subjected to AD conversion, and passes a processed frame to the control circuit 112. Here, in a case where a terminal performs MIMO communication, the control circuit 112 also performs processing related to MIMO, for example, channel estimation, transmission weight calculation and stream separation.

Here, a switch that switches the antennas 1 to N between any one of the transmission circuit 122 and the reception circuit 123 may be disposed in the RF unit. By controlling the switch, at the time of transmission, the antennas 1 to N may be connected to the transmission circuit 122 and, at the time of reception, the antennas 1 to N may be connected to the reception circuit 123.

In FIG. 28, although the DA conversion circuits 115 and 116 and the AD conversion circuits 117 and 118 are disposed with/at the baseband unit 111, they may be configured to be disposed with/at the RF unit 121.

Here, a radio communication unit may be formed with the transmission circuit 122 and the reception circuit 123. The radio communication unit may be formed to include DA conversion circuit 115, DA conversion circuit 116, DA conversion circuit 117 and DA conversion circuit 118 in addition to the transmission circuit 122 and the reception circuit 123. Also, in addition to this, the radio communication unit may be formed to include the respective PHY processing part of the transmission processing circuit 113 and the reception processing circuit 114. Alternatively, the radio communication unit may be formed with the respective PHY reception processing unit of the transmission processing circuit 113 and the reception processing circuit 114.

### (Seventh Example)

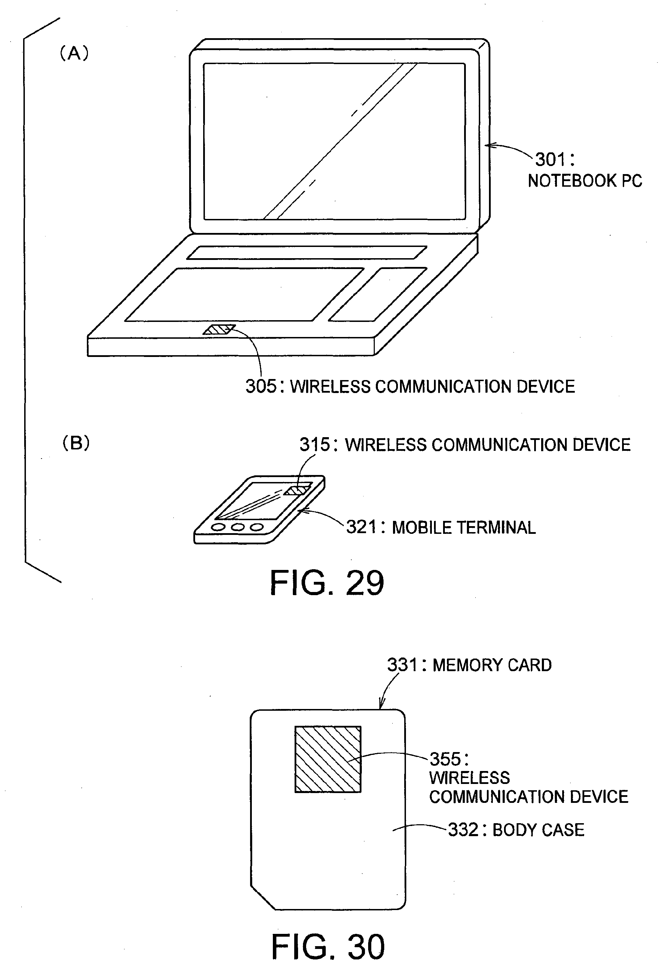

FIG. 29(A) and FIG. 29(B) are perspective views of wireless terminal according to the seventh example. The wireless terminal in FIG. 29(A) is a notebook PC 301 and the wireless communication device in FIG. 29(B) is a mobile terminal 321. Each of them corresponds to one form of a terminal (which may indicate a base station). The notebook PC 301 and the mobile terminal 321 are equipped with wireless communication devices 305 and 315, respectively. The wireless communication device provided in a terminal (which may indicate a base station) which has been described above can be used as the wireless communication devices 305 and 315. A wireless terminal carrying a wireless communication device is not limited to notebook PCs and mobile terminals. For example, it can be installed in a TV, a digital camera, a wearable device, a tablet, a smart phone, a gaming device, a network storage device, a monitor, a digital audio player, a web camera, a video camera, a projector, a navigation system, an external adapter, an internal adapter, a set top box, a gateway, a printer server, a mobile access point, a router, an enterprise/service provider access point, a portable device, a handheld device and so on.

Moreover, a wireless communication device installed in a terminal (which may indicate a base station) can also be provided in a memory card. FIG. 30 illustrates an example of a wireless communication device mounted on a memory card. A memory card 331 contains a wireless communication device 355 and a body case 332. The memory card 331 uses the wireless communication device 355 for wireless communication with external devices. Here, in FIG. 30, the description of other installed elements (for example, a memory, and so on) in the memory card 331 is omitted.

### (Eighth Example)

In the eighth example, a bus, a processor unit and an external interface unit are provided in addition to the configuration of the wireless communication device according to any of the first to seventh examples. The processor unit and the external interface unit are connected with an external memory (a buffer) through the bus. A firmware operates the processor unit. Thus, by adopting a configuration in which the firmware is included in the wireless communication device, the functions of the wireless communication device can be easily changed by rewriting the firmware. The processing unit in which the firmware operates may be a processor that performs the process of the communication controlling device or the control unit according to the present example, or may be another processor that performs a process relating to extending or altering the functions of the process of the communication controlling device or the control unit. The processing unit in which the firmware operates may be included in the access point or the wireless terminal according to the present example. Alternatively, the processing unit may be included in the integrated circuit of the wireless communication device installed in the access point, or in the integrated circuit of the wireless communication device installed in the wireless terminal.

### (Ninth Example)

In the ninth example, a clock generating unit is provided in addition to the configuration of the wireless communication device according to any of the first to seventh examples. The clock generating unit generates a clock and outputs the clock from an output terminal to the exterior of the wireless communication device. Thus, by outputting to the exterior the clock generated inside the wireless communication device and operating the host by the clock output to the exterior, it is possible to operate the host and the wireless communication device in a synchronized manner.

### (Tenth Example)

In the tenth example, a power source unit, a power source controlling unit and a wireless power feeding unit are included in addition to the configuration of the wireless communication device according to any of the first to seventh examples. The power supply controlling unit is connected to the power source unit and to the wireless power feeding unit, and performs control to select a power source to be supplied to the wireless communication device. Thus, by adopting a configuration in which the power source is included in the wireless communication device, power consumption reduction operations that control the power source are possible.

### (Eleventh Example)

In the eleventh example, a SIM card is added to the configuration of the wireless communication device according to the tenth example. For example, the SIM card is connected with the MAC processing unit 10, the MAC/PHY management unit 60 or the controlling unit 112 in the wireless communication device. Thus, by adopting a configuration in which the SIM card is included in the wireless communication device, authentication processing can be easily performed.

### (Twelfth Example)

In the twelfth example, a video image compressing/decompressing unit is added to the configuration of the wireless communication device according to the eighth example. The video image compressing/decompressing unit is connected to the bus. Thus, by adopting a configuration in which the video image compressing/decompressing unit is included in the wireless communication device, transmitting a compressed video image and decompressing a received compressed video image can be easily done.

### (Thirteenth Example)

In the thirteenth example, an LED unit is added to the configuration of the wireless communication device according to any of the first to seventh examples. For example, the LED unit is connected to at least one of the MAC processing unit 10, the MAC/PHY management unit 60, the transmission processing circuit 113, the reception processing circuit 114 and the controlling circuit 112. Thus, by adopting a configuration in which the LED unit is included in the wireless communication device, notifying the operation state of the wireless communication device to the user can be easily done.

### (Fourteenth Example)

In the fourteenth example, a vibrator unit is included in addition to the configuration of the wireless communication device according to any of the first to seventh examples. For example, the vibrator unit is connected to at least one of the MAC processing unit 10, the MAC/PHY management unit 60, the transmission processing circuit 113, the reception processing circuit 114 and the controlling circuit 112. Thus, by adopting a configuration in which the vibrator unit is included in the wireless communication device, notifying the operation state of the wireless communication device to the user can be easily done.

### (Fifteenth example)

In a fifteenth example, the configuration of the wireless communication device includes a display in addition to the configuration of the wireless communication device (the wireless communication device of the terminal (which may indicate the base station) according to any one of the first to seventh examples. The display may be connected to the MAC processing unit of the wireless communication device via a bus (not shown). As seen from the above, the configuration including the display to display the operation state of the wireless communication device on the display allows the operation status of the wireless communication device to be easily notified to a user.

### (Sixteenth Example)

In the present example, [1] the frame type in the wireless communication system, [2] a technique of disconnection between wireless communication devices, [3] an access scheme of a wireless LAN system and [4] a frame interval of a wireless LAN are described.

### [1] Frame type in communication system

Generally, as mentioned above, frames treated on a wireless access protocol in a wireless communication system are roughly divided into three types of the data frame, the management frame and the control frame. These types are normally shown in a header part which is commonly provided to frames. As a display method of the frame type, three types may be distinguished in one field or may be distinguished by a combination of two fields.

The management frame is a frame used to manage a physical communication link with a different wireless communication device. For example, there are a frame used to perform communication setting with the different wireless communication device or a frame to release communication link (that is, to disconnect the connection), and a frame related to the power save operation in the wireless communication device.

The data frame is a frame to transmit data generated in the wireless communication device to the different wireless communication device after a physical communication link with the different wireless communication device is established. The data is generated in a higher layer of the present example and generated by, for example, a user's operation.

The control frame is a frame used to perform control at the time of transmission and reception (exchange) of the data frame with the different wireless communication device. A response frame transmitted for the acknowledgment in a case where the wireless communication device receives the data frame or the management frame, belongs to the control frame.

These three types of frames are subjected to processing based on the necessity in the physical layer and then transmitted as physical packets via an antenna. Here, in a procedure of connection establishment, a connection request frame and a connection reception frame denote the management frame, and it is possible to use the response frame of the control frame as a confirmation frame with respect to the connection reception frame.

### [2] Technique of disconnection between wireless communication devices

For disconnection, there are an explicit technique and an implicit technique. As the explicit technique, a frame to disconnect any one of the connected wireless communication devices is transmitted. This frame is classified into the management frame. The frame for disconnection may be referred to as "release frame" by the meaning of releasing connection, for example. Normally, it is determined that the connection is disconnected at the timing of transmitting the release frame in a wireless communication device on the side to transmit the release frame and at the timing of receiving the release frame in a wireless communication device on the side to receive the release frame. Afterward, it returns to the initial state in a communication phase, for example, a state to search for a wireless communication device of the communicating partner. This is because, at the time of transmitting the frame for disconnection, a physical wireless link may not be secured, for example, the communication distance to the wireless communication device of connection destination is separated and radio signals cannot be received or decoded.

On the other hand, as the implicit technique, it is determined that the connection state is disconnected in a case where frame transmission (transmission of a data frame and management frame or transmission of a response frame with respect to a frame transmitted by the subject device) is not detected from a wireless communication device of the connection partner which has established the connection for a certain period. Such a technique is provided because, in a state where it is determined that the connection is disconnected as mentioned above, a state is considered where the physical wireless link cannot be secured, for example, the communication distance to the wireless communication device of the connection destination is separated and the radio signals cannot be received or decoded. That is, it is because the reception of the release frame cannot be expected.

As a specific example to determine the disconnection of connection in an implicit method, a timer is used. For example, at the time of transmitting a data frame that requests an acknowledgment response frame, a first timer (for example, a retransmission timer for a data frame) that limits the retransmission period of the frame is activated, and, if the acknowledgement response frame to the frame is not received until the expiration of the first timer (that is, until a desired retransmission period passes), retransmission is performed. When the acknowledgment response frame to the frame is received, the first timer is stopped.

On the other hand, when the acknowledgment response frame is not received and the first timer expires, for example, a management frame to confirm whether a wireless communication device of a connection partner is still present (in a communication range) (in other words, whether a wireless link is secured) is transmitted, and, at the same time, a second timer (for example, a retransmission timer for the management frame) to limit the retransmission period of the frame is activated. Similarly to the first timer, even in the second timer, retransmission is performed if an acknowledgment response frame to the frame is not received until the second timer expires, and it is determined that the connection is disconnected when the second timer expires.

Alternatively, a third timer is activated when a frame is received from a wireless communication device of the connection partner, the third timer is stopped every time the frame is newly received from the wireless communication device of the connection partner, and it is activated from the initial value again. When the third timer expires, similarly to the above, a management frame to confirm whether the wireless communication device of the connection party is still present (in a communication range) (in other words, whether a wireless link is secured) is transmitted, and, at the same time, a second timer (for example, a retransmission timer for the management frame) to limit the retransmission period of the frame is activated. Even in this case, retransmission is performed if an acknowledgment response frame to the frame is not received until the second timer expires, and it is determined that the connection is disconnected when the second timer expires. The latter management frame to confirm whether the wireless communication device of the connection partner is still present may differ from the management frame in the former case. Moreover, regarding the timer to limit the retransmission of the management frame in the latter case, although the same one as that in the former case is used as the second timer, a different timer may be used.

### [3] Access scheme of wireless LAN system

For example, there is a wireless LAN system with an assumption of communication or competition with a plurality of wireless communication devices. CSMA/CA is set as the basis of an access scheme in the IEEE802.11 (including an extension standard or the like) wireless LAN. In a scheme in which transmission by a certain wireless communication device is grasped and transmission is performed after a fixed time from the transmission end, simultaneous transmission is performed in the plurality of wireless communication devices that grasp the transmission by the wireless communication device, and, as a result, radio signals collide and frame transmission fails. By grasping the transmission by the certain wireless communication device and waiting for a random time from the transmission end, transmission by the plurality of wireless communication devices that grasp the transmission by the wireless communication device stochastically disperses. Therefore, if the number of wireless communication devices in which the earliest time in a random time is subtracted is one, frame transmission by the wireless communication device succeeds and it is possible to prevent frame collision. Since the acquisition of the transmission right based on the random value becomes impartial between the plurality of wireless communication devices, it can say that a scheme adopting Carrier Avoidance is a suitable scheme to share a radio medium between the plurality of wireless communication devices.

### [4] Frame interval of wireless LAN

The frame interval of the IEEE802.11 wireless LAN is described. There are six types of frame intervals used in the IEEE802.11 wireless LAN, such as distributed coordination function interframe space (DIFS), arbitration interframe space (AIFS), point coordination function interframe space (PIFS), short interframe space (SIFS), extended interframe space (EIFS) and reduced interframe space (RIFS).

The definition of the frame interval is defined as a continuous period that should confirm and open the carrier sensing idle before transmission in the IEEE802.11 wireless LAN, and a strict period from a previous frame is not discussed. Therefore, the definition is followed in the explanation of the IEEE802.11 wireless LAN system. In the IEEE802.11 wireless LAN, a waiting time at the time of random access based on CSMA/CA is assumed to be the sum of a fixed time and a random time, and it can say that such a definition is made to clarify the fixed time.

DIFS and AIFS are frame intervals used when trying the frame exchange start in a contention period that competes with other wireless communication devices on the basis of CSMA/CA. DIFS is used in a case where the right of priority according to the traffic type is not distinguished, AIFS is used in a case where the right of priority by traffic identifier (TID) is provided.

Since operation is similar between DIFS and AIFS, AIFS is chiefly used to give an explanation below. In the IEEE802.11 wireless LAN, access control including the start of frame exchange in the MAC layer is performed. In addition, in a case where QoS (Quality of Service) is supported when data is transferred from a higher layer, the traffic type is notified together with the data, and the data is classified for the priority at the time of access on the basis of the traffic type. The class at the time of this access is referred to as "access category (AC)". Therefore, the value of AIFS is provided every access category.

PIFS denotes a frame interval to enable access which is more preferential than other competing wireless communication devices, and the period is shorter than the values of DIFS and AIFS. SIFS denotes a frame interval which can be used in a case where frame exchange continues in a burst manner at the time of transmission of a control frame of a response system or after the access right is acquired once. EIFS denotes a frame interval caused when frame reception fails.

RIFS denotes a frame interval which can be used in a case where a plurality of frames are consecutively transmitted to the same wireless communication device in a burst manner after the access right is acquired once, and a response frame from a wireless communication device of the transmission partner is not requested while RIFS is used.

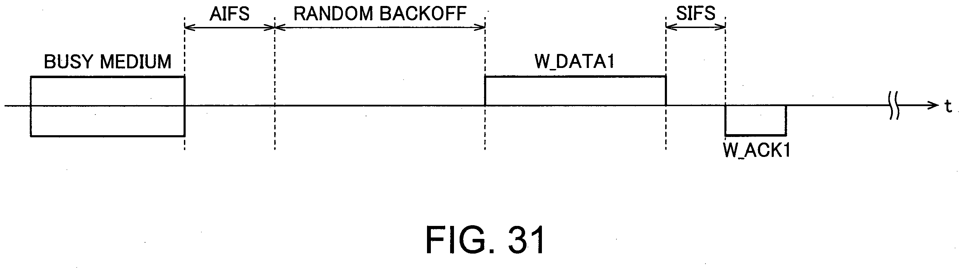

Here, FIG. 31 illustrates one example of frame exchange in a competitive period based on the random access in the IEEE802.11 wireless LAN.

When a transmission request of a data frame (W_DATA1) is generated in a certain wireless communication device, a case is assumed where it is recognized that a medium is busy (busy medium) as a result of carrier sensing. In this case, AIFS of a fixed time is set from the time point at which the carrier sensing becomes idle, and, when a random time (random backoff) is set afterward, data frame W_DATA1 is transmitted to the communicating partner.

The random time is acquired by multiplying a slot time by a pseudorandom integer led from uniform distribution between contention windows (CW) given by integers from 0. Here, what multiplies CW by the slot time is referred to as "CW time width". The initial value of CW is given by CWmin, and the value of CW is increased up to CWmax every retransmission. Similarly to AIFS, both CWmin and CWmax have values every access category. In a wireless communication device of transmission destination of W_DATA1, when reception of the data frame succeeds, a response frame (W_ACK1) is transmitted after SIFS from the reception end time point. If it is within a transmission burst time limit when W_ACK1 is received, the wireless communication device that transmits W_DATA1 can transmit the next frame (for example, W_DATA2) after SIFS.

Although AIFS, DIFS, PIFS and EIFS are functions between SIFS and the slot-time, SIFS and the slot time are defined every physical layer. Moreover, although parameters to which the value of each access category such as AIGS, CWmin and CWmax is set can be set every communication group (which is a basic service set (BSS) in the IEEE802.11 wireless LAN), the default values are defined.

For example, in the definition of 802.11ac, with an assumption that SIFS is 16 µs and the slot time is 9 µs, and thereby PIFS is 25 µs, DIFS is 34 µs, the default value of the frame interval of an access category of BACKGROUND (AC_BK) in AIFS is 79 µs, the default value of the frame interval of BEST EFFORT (AC_BE) is 43 µs, the default value of the frame interval between VIDEO(AC_VI) and VOICE(AC_VO) is 34 µs, and the default values of CWmin and CWmax are 31 and 1023 in AC_BK and AC_BE, 15 and 31 in AC_VI and 7 and 15 in AC_VO. Here, EIFS denotes the sum of SIFS, DIFS, and the time length of a response frame transmitted at the lowest mandatory physical rate.

In each example, a frame may indicate not only one called a frame in IEEE802.11 standards but also one called a packet. In the case that a base station transmits a plurality of frames to a plurality of terminals, the frames may be same frames or different frames. Generally, in the case that a base station transmits/receives a plurality of frames or a plurality of Xth frames, the frames or the Xth frames may be same frames or different frame. X is any number equal to or more than one.

As another example, the term "memory" may encompass any electronic component which can store electronic information. The "memory" may refer to various types of media such as random access memory (RAM), read-only memory (ROM), programmable read-only memory (PROM), erasable programmable read only memory (EPROM), electrically erasable PROM (EEPROM), non-volatile random access memory (NVRAM), flash memory, magnetic or optical data storage, which are readable by a processor. It can be said that the memory electronically communicates with a processor if the processor read and/or write information for the memory. The memory may be integrated to a processor and also in this case, it can be said that the memory electronically communication with the processor. The term "circuitry" may refer to not only electric circuits or a system of circuits used in a device but also a single electric circuit or a part of the single electric circuit.

## Claims

1. A wireless communication device, comprising:
a receiver (40) configured to receive, from each of a plurality of terminals, respective terminal capability information showing a number of channel sets capable of being allocated to the respective terminal in a predetermined frequency band including a plurality of channels,
wherein each of the channel sets is one or more consecutive channels in frequency in the predetermined frequency band including the plurality of channels,
wherein each of the terminals is configured to independently transmit and receive signals among channel sets whose number is shown in its terminal capability information, and
wherein each of terminals is configured to independently determine a carrier sense state being busy or idle on each of the channel sets; and
control circuitry (60) to assign channels selected from the plurality of channels to the terminals for multi-user communication with the terminals according to the terminal capability information and information indicating the plurality of channels; and
a transmitter (30) configured to transmit information of the assignment of channels to the terminals wherein one or more of the channel sets of each of the terminals are allocated in the predetermined frequency band.

2. The wireless communication device according to claim 1, wherein the receiver is configured to receive the terminal capability information from terminals which are compatible with the multi-user communication.

3. The wireless communication device according to claim 1, wherein the terminal capability information shows a maximum number of channel sets capable of capable of being allocated in the predetermined frequency band.

4. The wireless communication device according to claim 2, wherein the transmitter (30) is configured to transmit information showing that the wireless communication device is capable of performing multi-user communication with the terminals, and
the receiver (40) is configured to receive the terminal capability information from the terminals after the information is transmitted.

5. The wireless communication device according to any one of claims 1 to 4, wherein the transmitter (30) is configured to transmit information showing a required number of the channel sets, and
wherein the receiver (40) is configured to receive the terminal capability information from the terminals in which the number of the channel sets capable of being allocated in the predetermined frequency band is equal to or greater than the required number.

6. The wireless communication device according to any one of claims 1 to 5, wherein the control circuitry (60) is configured to select first terminals from the terminals so that a total of the number of channels sets shown in the terminal capability information of the first terminals is equal to or lower than a number of channel sets on which the wireless communication device is configured to transmit and receive independently and on which the wireless communication device is capable of determining a carrier sense being busy or idle independently, and assign the channels to the first terminals.

7. The wireless communication device according to any one of claims 1 to 6, wherein the receiver (40) is configured to receive information showing a maximum number of channels capable of being contained in one channel set, from the terminals, and
the control circuitry (60) is configured to assign the channels based on the maximum number of channels shown in the information.

8. The wireless communication device according to any one of claims 1 to 7, wherein
the receiver (40) is configured to receive information showing a maximum width of channels capable of being contained in one channel set, from the terminals and
the control circuitry (60) is configured to assign the channels based on the maximum width of channels shown in the information.

9. The wireless communication device according to any one of claims 1 to 8, wherein
the receiver (40) is configured to receive information showing constraint of a guard band which is required to be positioned between the channel sets in the terminals, and
the control circuitry (60) is configured to assign the channels based on the constraint of the guard band shown in the information.

10. A wireless communication method performed by a wireless communication device, comprising:
receiving, from each of a plurality of terminals, respective terminal capability information showing a number of channel sets capable of being allocated to the respective terminal in a predetermined frequency band including a plurality of channels,
wherein each of the channel sets is one or more consecutive channels in frequency in the predetermined frequency band including the plurality of channels,
wherein each of the terminals is configured to independently transmit and receive signals among channel sets whose number is shown in its terminal capability information, and
wherein each of terminals is configured to independently determine a carrier sense state being busy or idle on each of the channel sets;
assigning channels selected from the plurality of channels to the terminals for multi-user communication with the terminals according to the terminal capability information and information indicating the plurality of channels; and
transmitting information of the assignment of channels to the terminals wherein one or more of the channel sets of each of the terminals are allocated in the predetermined frequency band.

11. The wireless communication method according to claim 10, comprising receiving the terminal capability information from terminals which are compatible with the multi-user communication.

12. The wireless communication method according to claim 10 or 11, wherein the terminal capability information shows a maximum number of channel sets capable of being allocated in the predetermined frequency band.

13. The wireless communication method according to any one of claims 10 to 12, further comprising:
transmitting information showing that the wireless communication device is capable of performing multi-user communication with the terminals; and
receiving the terminal capability information from the terminals after the information is transmitted.

14. The wireless communication method according to any one of claims 10 to 13, further comprising:
transmitting information showing a required number of the channel sets; and
receiving the terminal capability information from the terminals in which the number of the channel sets capable of being allocated in the predetermined frequency band is equal to or greater than the required number.

15. The wireless communication method according to any one of claims 10 to 14, further comprising:
selecting first terminals from the terminals so that a total of the number of channels sets shown in the terminal capability information of the first terminals is equal to or lower than a number of channel sets on which the wireless communication device is capable of transmitting and receiving independently and on which the wireless communication device is capable of determining a carrier sense being busy or idle independently; and
assigning the channels to the first terminals.

## Patentansprüche

1. Eine drahtlose Kommunikationsvorrichtung, aufweisend:
einen Empfänger (40), der konfiguriert ist, um von jedem einer Vielzahl von Terminals jeweilige Terminalfähigkeitsinformationen zu empfangen, die eine Anzahl an Kanalsätzen zeigen, die in der Lage sind, dem jeweiligen Terminal in einem vorbestimmten Frequenzband einschließlich einer Vielzahl von Kanälen zugewiesen zu werden,
wobei jeder der Kanalsätze einen oder mehrere aufeinanderfolgende Kanäle einer Frequenz in dem vorbestimmten Frequenzband einschließlich der Vielzahl von Kanälen darstellt,
wobei jedes der Terminals konfiguriert ist, um Signale unter Kanalsätzen unabhängig zu übertragen und zu empfangen, deren Anzahl in ihren Terminalfähigkeitsinformationen gezeigt wird, und
wobei jedes der Terminals konfiguriert ist, um einen Trägerabfragezustand, der beschäftigt oder frei ist, in jedem der Kanalsätze unabhängig zu bestimmen; und
eine Steuerschaltung (60) zum Zuweisen von Kanälen, die aus der Vielzahl von Kanälen ausgewählt sind, zu den Terminals für eine Multinutzerkommunikation mit den Terminals gemäß den Terminalfähigkeitsinformationen und Informationen, die die Vielzahl von Kanälen anzeigen; und
einen Transmitter (30), der konfiguriert ist, um Informationen der Zuweisung von Kanälen an die Terminals zu übertragen, wobei ein oder mehrere der Kanalsätze von jedem der Terminals in dem vorbestimmten Frequenzband zugewiesen ist/sind.

2. Die drahtlose Kommunikationsvorrichtung nach Anspruch 1, wobei der Empfänger konfiguriert ist, um die Terminalfähigkeitsinformationen von Terminals zu empfangen, die mit der Multinutzerkommunikation kompatibel sind.

3. Die drahtlose Kommunikationsvorrichtung nach Anspruch 1, wobei die Terminalfähigkeitsinformationen eine maximale Anzahl an Kanalsätzen zeigen, die in der Lage sind, in dem vorbestimmten Frequenzband zugewiesen zu werden.

4. Die drahtlose Kommunikationsvorrichtung nach Anspruch 2, wobei der Transmitter (30) konfiguriert ist, um Informationen zu übertragen, die zeigen, dass die drahtlose Kommunikationsvorrichtung in der Lage ist, eine Multinutzerkommunikation mit den Terminals durchzuführen, und
der Empfänger (40) konfiguriert ist, um die Terminalfähigkeitsinformationen von den Terminals zu empfangen, nachdem die Informationen übertragen worden sind.

5. Die drahtlose Kommunikationsvorrichtung nach einem der Ansprüche 1-4, wobei der Transmitter (30) konfiguriert ist, um Informationen zu übertragen, die eine erforderliche Anzahl der Kanalsätze zeigen, und
wobei der Empfänger (40) konfiguriert ist, um die Terminalfähigkeitsinformationen von den Terminals zu empfangen, in denen die Anzahl der Kanalsätze, die in der Lage sind, in dem vorbestimmten Frequenzband zugewiesen zu werden, gleich oder größer als die erforderliche Anzahl ist.

6. Die drahtlose Kommunikationsvorrichtung nach einem der Ansprüche 1-5, wobei die Steuerschaltung (60) konfiguriert ist, um erste Terminals aus den Terminals auszuwählen, so dass eine Gesamtanzahl an Kanalsätzen, die in den Terminalfähigkeitsinformationen der ersten Terminals gezeigt sind, gleich oder kleiner als eine Anzahl an Kanalsätzen ist, in denen die drahtlose Kommunikationsvorrichtung konfiguriert ist, um unabhängig zu übertragen und zu empfangen, und in denen die drahtlose Kommunikationsvorrichtung in der Lage ist, eine Trägerabfrage, die beschäftigt oder frei ist, unabhängig zu bestimmen und die Kanäle den ersten Terminals zuzuweisen.

7. Die drahtlose Kommunikationsvorrichtung nach einem der Ansprüche 1-6, wobei der Empfänger (40) konfiguriert ist, um Informationen, die eine maximale Anzahl an Kanälen zeigen, die in der Lage sind, in einem Kanalsatz enthalten zu sein, von den Terminals zu empfangen, und
die Steuerschaltung (60) konfiguriert ist, um die Kanäle basierend auf der maximalen Anzahl an Kanälen, die in den Informationen gezeigt sind, zuzuweisen.

8. Die drahtlose Kommunikationsvorrichtung nach einem der Ansprüche 1-7, wobei
der Empfänger (40) konfiguriert ist, um Informationen, die eine maximale Breite von Kanälen zeigen, die in der Lage sind, in einem Kanalsatz enthalten zu sein, von den Terminals zu empfangen, und
die Steuerschaltung (60) konfiguriert ist, um die Kanäle basierend auf der maximalen Breite von Kanälen, die in den Informationen gezeigt sind, zuzuweisen.

9. Die drahtlose Kommunikationsvorrichtung nach einem der Ansprüche 1-8, wobei
der Empfänger (40) konfiguriert ist, um Informationen zu empfangen, die eine Einschränkung eines Sicherheitsbands zeigen, das zwischen den Kanalsätzen in den Terminals angeordnet werden soll, und
die Steuerschaltung (60) konfiguriert ist, um die Kanäle basierend auf der Einschränkung des Sicherheitsbands, die in den Informationen gezeigt ist, zuzuweisen.

10. Ein drahtloses Kommunikationsverfahren, das durch eine drahtlose Kommunikationsvorrichtung durchgeführt wird, aufweisend:
Empfangen, von jedem einer Vielzahl von Terminals, von jeweiligen Terminalfähigkeitsinformationen, die eine Anzahl an Kanalsätzen zeigen, die in der Lage sind, dem jeweiligen Terminal in einem vorbestimmten Frequenzband einschließlich einer Vielzahl von Kanälen zugewiesen zu werden,
wobei jeder der Kanalsätze einen oder mehrere aufeinanderfolgende Kanäle einer Frequenz in dem vorbestimmten Frequenzband einschließlich der Vielzahl von Kanälen darstellt,
wobei jedes der Terminals konfiguriert ist, um Signale unter Kanalsätzen unabhängig zu übertragen und zu empfangen, deren Anzahl in ihren Terminalfähigkeitsinformationen gezeigt ist, und
wobei jedes der Terminals konfiguriert ist, um einen Trägerabfragezustand, der beschäftigt oder frei ist, in jedem der Kanalsätze unabhängig zu bestimmen;
Zuweisen von Kanälen, die aus der Vielzahl von Kanälen ausgewählt sind, zu den Terminals für eine Multinutzerkommunikation mit den Terminals gemäß den Terminalfähigkeitsinformationen und Informationen, die die Vielzahl von Kanälen anzeigen; und
Übertragen von Informationen der Zuweisung von Kanälen zu den Terminals, wobei ein oder mehrere der Kanalsätze von jedem der Terminals in dem vorbestimmten Frequenzband zugewiesen ist/sind.

11. Das drahtlose Kommunikationsverfahren nach Anspruch 10, mit einem Empfangen der Terminalfähigkeitsinformationen von Terminals, die mit der Multinutzerkommunikation kompatibel sind.

12. Das drahtlose Kommunikationsverfahren nach Anspruch 10 oder 11, wobei die Terminalfähigkeitsinformationen eine maximale Anzahl an Kanalsätzen zeigen, die in der Lage sind, in dem vorbestimmten Frequenzband zugewiesen zu werden.

13. Das drahtlose Kommunikationsverfahren nach einem der Ansprüche 10-12, ferner aufweisend:
Übertragen von Informationen, die zeigen, dass die drahtlose Kommunikationsvorrichtung in der Lage ist, eine Multinutzerkommunikation mit den Terminals durchzuführen; und
Empfangen der Terminalfähigkeitsinformationen von den Terminals, nachdem die Informationen übertragen worden sind.

14. Das drahtlose Kommunikationsverfahren nach einem der Ansprüche 10-13, ferner aufweisend:
Übertragen von Informationen, die eine erforderliche Anzahl der Kanalsätze zeigen; und
Empfangen der Terminalfähigkeitsinformationen von den Terminals, in denen die Anzahl der Kanalsätze, die in der Lage sind, in dem vorbestimmten Frequenzband zugewiesen zu werden, gleich oder größer als die erforderliche Anzahl ist.

15. Das drahtlose Kommunikationsverfahren nach einem der Ansprüche 10-14, ferner aufweisend:
Auswählen von ersten Terminals aus den Terminals, so dass eine Gesamtanzahl an Kanalsätzen, die in den Terminalfähigkeitsinformationen der ersten Terminals gezeigt sind, gleich oder kleiner als eine Anzahl an Kanalsätzen ist, in denen die drahtlose Kommunikationsvorrichtung in der Lage ist, unabhängig zu übertragen und zu empfangen, und in denen die drahtlose Kommunikationsvorrichtung in der Lage ist, eine Trägerabfrage, die beschäftigt oder frei ist, unabhängig zu bestimmen; und
Zuweisen der Kanäle zu den ersten Terminals.

## Revendications

1. Dispositif de communication sans fil, comprenant :
un récepteur (40) configuré de manière à recevoir, en provenance de chaque terminal d'une pluralité de terminaux, des informations de capacités de terminaux respectifs indiquant un nombre d'ensembles de canaux en mesure d'être affectés au terminal respectif dans une bande de fréquences prédéterminée incluant une pluralité de canaux ;
dans lequel chacun des ensembles de canaux correspond à un ou plusieurs canaux consécutifs en fréquence dans la bande de fréquences prédéterminée incluant la pluralité de canaux ;
dans lequel chacun des terminaux est configuré de manière à émettre et recevoir, indépendamment, des signaux entre des ensembles de canaux dont le nombre est indiqué dans ses informations de capacités de terminaux ; et
dans lequel chacun des terminaux est configuré de manière à déterminer, indépendamment, un état de détection de porteuse comme étant un état « occupé » ou « inactif » sur chacun des ensembles de canaux ; et
un montage de circuits de commande (60) destiné à affecter des canaux sélectionnés parmi la pluralité de canaux, aux terminaux, pour une communication multi-utilisateur avec les terminaux, selon les informations de capacités de terminaux et des informations indiquant la pluralité de canaux ; et
un émetteur (30) configuré de manière à transmettre des informations de l'affectation de canaux aux terminaux, dans lequel un ou plusieurs des ensembles de canaux de chacun des terminaux sont affectés dans la bande de fréquences prédéterminée.

2. Dispositif de communication sans fil selon la revendication 1, dans lequel le récepteur est configuré de manière à recevoir les informations de capacités de terminaux en provenance de terminaux qui sont compatibles avec la communication multi-utilisateur.

3. Dispositif de communication sans fil selon la revendication 1, dans lequel les informations de capacités de terminaux indiquent un nombre maximum d'ensembles de canaux en mesure d'être affectés dans la bande de fréquences prédéterminée.

4. Dispositif de communication sans fil selon la revendication 2, dans lequel l'émetteur (30) est configuré de manière à transmettre des informations indiquant que le dispositif de communication sans fil est en mesure de mettre en œuvre une communication multi-utilisateur avec les terminaux ; et
le récepteur (40) est configuré de manière à recevoir les informations de capacités de terminaux en provenance des terminaux après que les informations ont été transmises.

5. Dispositif de communication sans fil selon l'une quelconque des revendications 1 à 4, dans lequel l'émetteur (30) est configuré de manière à transmettre des informations indiquant un nombre requis des ensembles de canaux ; et
dans lequel le récepteur (40) est configuré de manière à recevoir les informations de capacités de terminaux en provenance des terminaux dans lesquels le nombre des ensembles de canaux en mesure d'être affectés dans la bande de fréquences prédéterminée est égal ou supérieur au nombre requis.

6. Dispositif de communication sans fil selon l'une quelconque des revendications 1 à 5, dans lequel le montage de circuits de commande (60) est configuré de manière à sélectionner des premiers terminaux parmi les terminaux, de sorte qu'un total du nombre d'ensembles de canaux indiqués dans les informations de capacités de terminaux des premiers terminaux est égal ou inférieur à un nombre d'ensembles de canaux sur lesquels le dispositif de communication sans fil est configuré de manière à émettre et recevoir indépendamment, et sur lesquels le dispositif de communication sans fil est en mesure de déterminer un état de détection de porteuse comme étant « occupé » ou « inactif », indépendamment, et à affecter les canaux aux premiers terminaux.

7. Dispositif de communication sans fil selon l'une quelconque des revendications 1 à 6, dans lequel le récepteur (40) est configuré de manière à recevoir des informations indiquant un nombre maximum de canaux en mesure d'être contenus dans un unique ensemble de canaux, en provenance des terminaux ; et
le montage de circuits de commande (60) est configuré de manière à affecter les canaux sur la base du nombre maximum de canaux indiqués dans les informations.

8. Dispositif de communication sans fil selon l'une quelconque des revendications 1 à 7, dans lequel
le récepteur (40) est configuré de manière à recevoir des informations indiquant une largeur maximale de canaux en mesure d'être contenus dans un unique ensemble de canaux, en provenance des terminaux ; et
le montage de circuits de commande (60) est configuré de manière à affecter les canaux sur la base de la largeur maximale de canaux indiquée dans les informations.

9. Dispositif de communication sans fil selon l'une quelconque des revendications 1 à 8, dans lequel :
le récepteur (40) est configuré de manière à recevoir des informations indiquant une contrainte d'une bande de garde qu'il est nécessaire de positionner entre les ensembles de canaux dans les terminaux ; et
le montage de circuits de commande (60) est configuré de manière à affecter les canaux sur la base de la contrainte de la bande de garde indiquée dans les informations.

10. Procédé de communication sans fil mis en œuvre par un dispositif de communication sans fil, comprenant les étapes ci-dessous consistant à :
recevoir, en provenance de chaque terminal d'une pluralité de terminaux, des informations de capacités de terminaux respectifs indiquant un nombre d'ensembles de canaux en mesure d'être affectés au terminal respectif dans une bande de fréquences prédéterminée incluant une pluralité de canaux ;
dans lequel chacun des ensembles de canaux correspond à un ou plusieurs canaux consécutifs en fréquence dans la bande de fréquences prédéterminée incluant la pluralité de canaux ;
dans lequel chacun des terminaux est configuré de manière à émettre et recevoir, indépendamment, des signaux entre des ensembles de canaux dont le nombre est indiqué dans ses informations de capacités de terminaux ; et
dans lequel chacun des terminaux est configuré de manière à déterminer, indépendamment, un état de détection de porteuse comme étant un état « occupé » ou « inactif » sur chacun des ensembles de canaux ;
affecter des canaux sélectionnés parmi la pluralité de canaux, aux terminaux, en vue d'une communication multi-utilisateur avec les terminaux, selon les informations de capacités de terminaux et des informations indiquant la pluralité de canaux ; et
transmettre des informations sur l'affectation de canaux aux terminaux, dans lequel un ou plusieurs des ensembles de canaux de chacun des terminaux sont affectés dans la bande de fréquences prédéterminée.

11. Procédé de communication sans fil selon la revendication 10, comprenant l'étape consistant à recevoir les informations de capacités de terminaux en provenance de terminaux qui sont compatibles avec la communication multi-utilisateur.

12. Procédé de communication sans fil selon la revendication 10 ou 11, dans lequel les informations de capacités de terminaux indiquent un nombre maximum d'ensembles de canaux en mesure d'être affectés dans la bande de fréquences prédéterminée.

13. Procédé de communication sans fil selon l'une quelconque des revendications 10 à 12, comprenant en outre les étapes ci-dessous consistant à :
transmettre des informations indiquant que le dispositif de communication sans fil est en mesure de mettre en œuvre une communication multi-utilisateur avec les terminaux ; et
recevoir les informations de capacités de terminaux en provenance des terminaux après que les informations ont été transmises.

14. Procédé de communication sans fil selon l'une quelconque des revendications 10 à 13, comprenant en outre les étapes ci-dessous consistant à :
transmettre des informations indiquant un nombre requis des ensembles de canaux ; et
recevoir les informations de capacités de terminaux en provenance des terminaux dans lesquels le nombre des ensembles de canaux en mesure d'être affectés dans la bande de fréquences prédéterminée est égal ou supérieur au nombre requis.

15. Procédé de communication sans fil selon l'une quelconque des revendications 10 à 14, comprenant en outre les étapes ci-dessous consistant à :
sélectionner des premiers terminaux parmi les terminaux, de sorte qu'un total du nombre d'ensembles de canaux indiqués dans les informations de capacités de terminaux des premiers terminaux est égal ou inférieur à un nombre d'ensembles de canaux sur lesquels le dispositif de communication sans fil est en mesure d'émettre et recevoir indépendamment, et sur lesquels le dispositif de communication sans fil est en mesure de déterminer un état de détection de porteuse comme étant « occupé » ou « inactif », indépendamment ; et
affecter les canaux aux premiers terminaux.
